(19) Europäisches Patentamt
European Patent Office
Office européen des brevets

(11) EP 4 632 002 A1

(12) EUROPEAN PATENT APPLICATION
published in accordance with Art. 153(4) EPC

(43) Date of publication:
**15.10.2025 Bulletin 2025/42**

(21) Application number: **23914821.6**

(22) Date of filing: **28.12.2023**

(51) International Patent Classification (IPC):
***C08L 27/18*** (2006.01) ***C08F 214/26*** (2006.01)

(52) Cooperative Patent Classification (CPC):
**C08F 214/26; C08L 27/18**

(86) International application number:
**PCT/JP2023/047240**

(87) International publication number:
**WO 2024/147336 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 JP 2023000312**

(71) Applicant: **Daikin Industries, Ltd.**
**Osaka-shi, Osaka 530-0001 (JP)**

(72) Inventors:
- **YANO, Ryouichi**
**Osaka-Shi, Osaka 530-0001 (JP)**
- **KONISHI, Tomohisa**
**Osaka-Shi, Osaka 530-0001 (JP)**
- **OTA, Daisuke**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

# (54) POLYMER BLEND, CROSSLINKABLE COMPOSITION, AND ARTICLE

(57) Provided is a polymer blend containing (a) a fluoroelastomer and (b) a crystalline fluoropolymer, wherein the fluoroelastomer (a) contains tetrafluoroethylene unit, a fluoroalkyl vinyl ether unit, and a nitrogen-containing crosslinking site, the crystalline fluoropolymer (b) contains tetrafluoroethylene unit and a nitrogen-containing crosslinking site, the polymer blend has a melting point of 310 to 320°C, and the content of the crystalline fluoropolymer (b) in the polymer blend is 4.0 to 15.0% by mass based on the total mass of the fluoroelastomer (a) and the crystalline fluoropolymer (b).

EP 4 632 002 A1

## Description

TECHNICAL FIELD

The present disclosure relates to a polymer blend, a crosslinkable composition, and an article.

BACKGROUND ART

Patent Document 1 discloses an emulsion mixture comprising 1) a microemulsion of a composition comprising a crosslinkable fluoroelastomer terpolymer consisting essentially of tetrafluoroethylene (TFE), perfluoroalkyl vinyl ether (PAVE), and perfluorocyano vinyl ether (CNVE) monomer units, and 2) a microemulsion comprising a functionalized polytetrafluoroethylene (PTFE) polymer comprising 0.1 to 3 mol% perfluorocyano vinyl ether (CNVE), wherein the particle size of the functionalized PTFE polymer is about 10 nm to 100 nm.

Patent Document 1 further discloses a crosslinkable composite comprising 1) a composition comprising a crosslinkable fluoroelastomer terpolymer consisting essentially of tetrafluoroethylene (TFE), perfluoromethyl vinyl ether (PMVE), and perfluorocyano vinyl ether (CNVE), and 2) a composition comprising a functionalized polytetrafluoroethylene (PTFE) polymer comprising crosslinkable moieties having a particle size of 10 nm to 100 nm wherein the crosslinkable fluoroelastomer terpolymer has less than about 3,000 ppb metal content, and further, wherein when the PTFE and the fluoroelastomer terpolymer are crosslinked to form a crosslinked composite, the crosslinked composite has a compression set of less than 50% when tested at 150°C.

RELATED ART

PATENT DOCUMENT

Patent Document 1: Japanese Translation of PCT International Application Publication No. 2009-500459

SUMMARY OF THE INVENTION

PROBLEM TO BE SOLVED BY THE INVENTION

An object of the present disclosure is to provide a polymer blend containing a fluoroelastomer and a crystalline fluoropolymer, the polymer blend being capable of providing an article that has a suitable hardness, the compression set of which at high temperatures is small, and, moreover, that unlikely has an increased compression set even after being used under severe conditions.

MEANS FOR SOLVING THE PROBLEM

The present disclosure provides a polymer blend containing (a) a fluoroelastomer and (b) a crystalline fluoropolymer, wherein the fluoroelastomer (a) contains tetrafluoroethylene unit, a fluoroalkyl vinyl ether unit, and a nitrogen-containing crosslinking site, the crystalline fluoropolymer (b) contains tetrafluoroethylene unit and a nitrogen-containing crosslinking site, the polymer blend has a melting point of 310 to 320°C, and the content of the crystalline fluoropolymer (b) in the polymer blend is 4.0 to 15.0% by mass based on the total mass of the fluoroelastomer (a) and the crystalline fluoropolymer (b).

EFFECTS OF INVENTION

The present disclosure can provide a polymer blend containing a fluoroelastomer and a crystalline fluoropolymer, the polymer blend being capable of providing an article that has a suitable hardness, the compression set of which at high temperatures is small, and, moreover, that unlikely has an increased compression set even after being used under severe conditions.

DESCRIPTION OF EMBODIMENTS

Hereinafter, specific embodiments of the present disclosure will now be described in detail, but the present disclosure is not limited to the following embodiments.

The polymer blend of the present disclosure contains a fluoroelastomer (a) and a crystalline fluoropolymer (b).

Patent Document 1 discloses that the use of the crosslinkable composite provides a composite having a

compression set of less than 50% when tested at 150°C. However, it has now been found that such conventional composite materials, even when the compression set is small before use, are problematic in that the compression set is likely increased when such composite materials are used under severe conditions.

In contrast, since the polymer blend of the present disclosure has the above configuration, the polymer blend of the present disclosure is capable of providing an article that has a suitable hardness and not only the compression set of which at high temperatures is small but also the compression set of which even after the article is used under severe conditions is unlikely increased. Although the reason therefor is not clear, it is conjectured that not only the fluoroelastomer (a) and the crystalline fluoropolymer (b) in the polymer blend each have a nitrogen-containing crosslinking site, but also the melting point of the polymer blend and the content of the crystalline fluoropolymer (b) are suitably regulated, accordingly, the nitrogen-containing crosslinking site of the fluoroelastomer (a) and the nitrogen-containing crosslinking site of the crystalline fluoropolymer (b) are mutually crosslinked in the polymer blend, and a suitable proportion of a mutually crosslinked structure is formed in the article.

(Fluoroelastomer (a))

The polymer blend of the present disclosure contains a fluoroelastomer (a).

The fluoroelastomer in the present disclosure is an amorphous fluorine-containing polymer. Being "amorphous" means that the size of a melting peak ($\Delta H$) appearing in differential scanning calorimetry [DSC] (at a temperature-increasing rate of 10°C/min) or differential thermal analysis [DTA] (at a temperature-increasing rate of 10°C/min) of the fluorine-containing polymer is 4.5 J/g or less. The fluoroelastomer exhibits elastomeric characteristics by being crosslinked. The elastomeric characteristics mean characteristics by which the polymer can be stretched and can retain its original length when the force required to stretch the polymer is no longer applied.

The fluoroelastomer may be a partially fluorinated elastomer or a perfluoroelastomer, and is preferably a perfluoroelastomer because it can provide an article, the compression set of which at high temperatures is smaller and, moreover, an increased compression set of which after being used under severe conditions is more suppressed.

In the present disclosure, the partially fluorinated elastomer is a fluorine-containing polymer that has a fluoromonomer unit, a perfluoromonomer unit content of less than 90 mol% based on all monomer units, a glass transition temperature of 20°C or lower, and a melting peak ($\Delta H$) of 4.5 J/g or less.

The perfluoroelastomer in the present disclosure means a fluoropolymer having a perfluoromonomer unit content of 90 mol% or more and preferably 91 mol% or more based on all polymerized units, a glass transition temperature of 20°C or lower, a melting peak ($\Delta H$) of 4.5 J/g or lower, and a fluorine atom concentration in the fluoropolymer of 71% by mass or more and preferably 71.5% by mass or more. The fluorine atom concentration in the fluoropolymer in the present disclosure is the concentration (% by mass) of the fluorine atoms contained in the fluoropolymer calculated based on the type and content of each monomer constituting the fluoropolymer.

In the present disclosure, the perfluoromonomer is a monomer that does not contain a carbon-hydrogen bond within the molecule. The perfluoromonomer may be a monomer containing carbon atoms and fluorine atoms in which some of the fluorine atoms bonded to any of the carbon atoms are replaced with chlorine atoms, and may be a monomer containing nitrogen atom, oxygen atom, sulfur atom, phosphorus atom, boron atom, or silicon atom in addition to the carbon atoms. The perfluoromonomer is preferably a monomer in which all hydrogen atoms are replaced with fluorine atoms. A monomer that provides a crosslinking site is not encompassed within the perfluoromonomer.

The monomer that provides a crosslinking site is a monomer (a cure site monomer) having a crosslinkable group that provides the fluoropolymer with a crosslinking site for forming a crosslink.

In the present disclosure, the content of each monomer constituting the fluoroelastomer (a), the crystalline fluoropolymer (b), and the polymer blend can be calculated by suitably combining NMR, FT-IR, elemental analysis, X-ray fluorescence analysis, and other known methods according to the type of monomer.

The Mooney viscosity ML(1+20) of the fluoroelastomer (a) at 170°C is preferably 30 or more, more preferably 50 or more, even more preferably 60 or more, and yet more preferably 70 or more, and is preferably 150 or less, more preferably 130 or less, and even more preferably 120 or less, because a suitable hardness can be imparted to an article, and an article, the compression set of which at high temperatures is smaller and, moreover, an increased compression set of which after being used under severe conditions is more suppressed, can be obtained.

The Mooney viscosity of the fluoroelastomer (a) can be regulated to the above range by regulating the composition of monomers constituting the fluoroelastomer (a), the molecular weight, and the like.

The Mooney viscosity can be measured at 170°C in accordance with JIS K 6300 using a Mooney viscometer MV 2000E manufactured by ALPHA TECHNOLOGIES.

The glass transition temperature of the fluoroelastomer (a) is preferably -30°C or higher, more preferably -20°C or higher, and even more preferably -10°C or higher, and is preferably 10°C or lower, more preferably 5°C or lower, and even more preferably 0°C or lower, because a suitable hardness can be imparted to an article, and an article, the compression set of which at high temperatures is smaller and, moreover, an increased compression set of which after being used under

severe conditions is more suppressed, can be obtained.

The glass transition temperature can be determined as follows: using a differential scanning calorimeter (X-DSC7000, manufactured by Hitachi High-Tech Science Corporation), a DSC curve is obtained by heating 3 mg of a sample at 20°C/min, and the temperature is read at the intermediate point of two intersections between each of the extension lines of the baselines before and after the secondary transition of the DSC curve and the tangent line at the inflection point of the DSC curve.

The fluoroelastomer (a) contained in the polymer blend of the present disclosure contains tetrafluoroethylene (TFE) unit, a fluoroalkyl vinyl ether (FAVE) unit, and a nitrogen-containing crosslinking site.

Because an article, the compression set of which at high temperatures is smaller and, moreover, an increased compression set of which after being used under severe conditions is more suppressed, can be obtained, FAVE that constitutes the FAVE unit is preferably at least one selected from the group consisting of:

a fluoromonomer represented by general formula (11): $CF_2$=CF-ORf$^{13}$
wherein Rf$^{13}$ represents a perfluoroalkyl group having 1 to 8 carbon atoms;
a fluoromonomer represented by general formula (12):

$$CF_2=CFOCF_2ORf^{14}$$

wherein Rf$^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and 1 to 3 oxygen atoms; and
a fluoromonomer represented by general formula (13):

$$CF_2=CFO(CF_2CF(Y^{15})O)_m(CF_2)_nF$$

wherein Y$^{15}$ represents a fluorine atom or a trifluoromethyl group, m is an integer of 1 to 4, and n is an integer of 1 to 4.

In particular, FAVE is preferably a fluoromonomer represented by general formula (11), more preferably at least one selected from the group consisting of $CF_2$=CF-$OCF_3$ (perfluoro(methyl vinyl ether) (PMVE)), $CF_2$=CF-$OCF_2CF_3$, and $CF_2$=CF-$OCF_2CF_2CF_3$, and even more preferably $CF_2$=CF-$OCF_3$.

The fluoroelastomer (a) contained in the polymer blend of the present disclosure contains a nitrogen-containing crosslinking site. The nitrogen-containing crosslinking site is a site that contains at least one nitrogen atom and that is for the fluoroelastomer (a) to form a crosslink.

The nitrogen-containing crosslinking site is preferably a nitrogen-containing crosslinkable group. The nitrogen-containing crosslinkable group is not limited as long as it contains at least one nitrogen atom and provides the fluoropolymer with a crosslinking site for forming a crosslink, and examples include a cyano group, an azide group, a sulfonyl azide group, a carbonyl azide group, and an amidine group. The nitrogen-containing crosslinkable group is preferably a cyano group because an article, the compression set of which at high temperatures is smaller and, moreover, an increased compression set of which after being used under severe conditions is more suppressed, can be obtained.

When the fluoroelastomer (a) has a cyano group as a nitrogen-containing crosslinking site, the cyano group can create a crosslink by forming a triazine ring through cyclotrimerization or by forming an imidazole ring using a tetramine compound as a crosslinking agent. Forming a crosslink in this manner enables a suitable hardness and an excellent compression set property to be imparted to the article.

The nitrogen-containing crosslinking site can be introduced into the fluoroelastomer by, for example, copolymerizing a monomer having a nitrogen-containing crosslinkable group when producing the fluoroelastomer. Also, the nitrogen-containing crosslinking site can be introduced into the fluoroelastomer by, for example, polymerizing a monomer in the presence of a nitrogen-containing chain transfer agent when producing the fluoroelastomer. The nitrogen-containing chain transfer agent may be a compound represented by $I(CF_2)CN$ (n is an integer of 1 to 15). Moreover, the nitrogen-containing crosslinking site can be introduced into the fluoroelastomer by, for example, reacting a functional group (such as -COF or -COOH) generated at the terminal of the fluoroelastomer with ammonia after the fluoroelastomer is produced.

The fluoroelastomer (a) in one embodiment contains a monomer unit having a nitrogen-containing crosslinkable group.

The monomer having a nitrogen-containing crosslinkable group is preferably a monomer having a cyano group. Examples of the monomer having a cyano group (-CN group) include monomers represented by:

Formula: $$CY^1_2=CY^1(CF_2)_n-CN$$

wherein Y$^1$ is each independently a hydrogen atom or a fluorine atom, and n is an integer of 1 to 8;

Formula: $CF_2=CFCF_2Rf^8-CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2-CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)-CN$

wherein m is an integer of 0 to 5, and n is an integer of 0 to 5;

Formula: $CF_2=CF(OCF_2CF(CF_3))_mO(CF_2)_n-CN$

wherein m is an integer of 0 to 5, and n is an integer of 1 to 8;

Formula: $CF_2=CF(OCF_2CF(CF_3))_m-CN$

wherein m is an integer of 1 to 5;

Formula: $CF_2=CFOCF_2(CF(CF_3)OCF_2)_nCF(-CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)_n-CN$

wherein m is an integer of 0 to 5, and n is an integer of 1 to 3;

Formula: $CH_2=CFCF_2OCF(CF_3)OCF(CF_3)-CN$;

Formula: $CH_2=CFCF_2OCH_2CF_2-CN$;

Formula: $CF_2=CFO(CF_2CF(CF_3)O)_mCF_2CF(CF_3)-CN$

wherein m is an integer of 0 or more;

Formula: $CF_2=CFOCF(CF_3)CF_2O(CF_2)_n-CN$

wherein n is an integer of 1 or more;

Formula: $CF_2=CFOCF_2OCF_2CF(CF_3)OCF_2-CN$;

Formula: $CF_2=CFO(CF_2)_3CN$; and

Formula: $CF_2=CFO(CF_2)_5CN$.

One of these monomers can be used singly, and these monomers can also be used in any combination.

Among the above monomers, preferable is a monomer represented by:

Formula: $CF_2=CF(OCF_2CF(CF_3))_mO(CF_2)_n-CN$

wherein m is an integer of 0 to 5, n is an integer of 1 to 8; and $CF_2=CFOCF_2CF(CF_3)OCF_2CF_2CN$ is more preferable.

The content of the nitrogen-containing crosslinking site in the fluoroelastomer (a) is preferably 0.5 to 3.0 mol%, more preferably 2.0 mol% or less, and even more preferably 1.5 mol% or less, based on all monomer units constituting the fluoroelastomer (a) being 100 mol%.

The content of the nitrogen-containing crosslinking site can be measured by infrared spectroscopy (IR).

The content of the nitrogen-containing crosslinkable group in the fluoroelastomer (a) is preferably 0.5 to 3.0 mol%, more preferably 2.0 mol% or less, and even more preferably 1.5 mol% or less, based on all monomer units constituting the fluoroelastomer (a) being 100 mol%.

The content of the nitrogen-containing crosslinkable group can be measured by infrared spectroscopy (IR).

The content of the cyano group in the fluoroelastomer (a) is preferably 0.5 to 3.0 mol%, more preferably 2.0 mol% or less, and even more preferably 1.5 mol% or less, based on all monomer units constituting the fluoroelastomer (a) being 100 mol%.

The content of the cyano group can be measured by infrared spectroscopy (IR).

The content of the monomer unit having a nitrogen-containing crosslinkable group in the fluoroelastomer (a) is preferably 0.5 to 3.0 mol%, more preferably 2.0 mol% or less, and even more preferably 1.5 mol% or less, based on all monomer units constituting the fluoroelastomer (a) being 100 mol%.

The content of the monomer unit having a nitrogen-containing crosslinkable group can be measured by infrared spectroscopy (IR).

The content of the monomer unit having a cyano group in the fluoroelastomer (a) is preferably 0.5 to 3.0 mol%, more preferably 2.0 mol% or less, and even more preferably 1.5 mol% or less, based on all monomer units constituting the fluoroelastomer (a) being 100 mol%.

The content of the monomer unit having a cyano group can be measured by infrared spectroscopy (IR).

The fluoroelastomer (a) is preferably a copolymer containing TFE unit, a FAVE unit, and a monomer unit having a nitrogen-containing crosslinkable group, more preferably a copolymer containing TFE unit, a FAVE unit, and a monomer unit having a cyano group, and even more preferably a copolymer containing TFE unit, a PMVE unit, and a monomer unit having a cyano group.

The content of TFE unit and FAVE unit in the fluoroelastomer (a) is preferably 97.0 to 99.5 mol%, more preferably 98.0 mol% or more, and even more preferably 98.5 mol% or more, based on all monomer units constituting the fluoroelastomer (a) being 100 mol%.

In the copolymer containing TFE unit, a FAVE unit, and a monomer unit having a nitrogen-containing crosslinkable group, the content ratio (mol%) of TFE unit/FAVE unit/monomer unit having a nitrogen-containing crosslinkable group is preferably 44.0 to 89.9/9.6 to 54.9/0.5 to 3.0, more preferably 50.0 to 78.0/20.0 to 49.5/0.5 to 2.0, and even more preferably 55.0 to 69.5/30.0 to 44.5/0.5 to 1.5.

(Crystalline fluoropolymer (b))

The polymer blend of the present disclosure contains a crystalline fluoropolymer (b).

In the present disclosure, the crystalline fluoropolymer is a partially crystalline fluorine-containing polymer and is a fluoroplastic. The crystalline fluoropolymer has a melting point and has thermoplasticity, and may be either melt-fabricable or non melt-processible. In the present disclosure, the term melt-fabricable means that a polymer can be melted and processed using a conventional processing device such as an extruder or an injection molding machine.

The crystalline fluoropolymer (b) has a melting point of 310 to 320°C. The melting point is preferably 311°C or higher, more preferably 312°C or higher, and even more preferably 313°C or higher, and is preferably 319°C or lower and more preferably 318°C or lower.

An excessively low melting point of the crystalline fluoropolymer (b) may make it difficult to obtain an article, the compression set of which at high temperatures is small. An excessively high melting point of the crystalline fluoropolymer (b) may make it difficult to obtain an article that unlikely has an increased compression set even after being used under severe conditions.

The melting point of the crystalline fluoropolymer (b) can be regulated to the above range by, for example, regulating the composition of monomers constituting the crystalline fluoropolymer (b). A high content of tetrafluoroethylene unit tends to result in a high melting point of the crystalline fluoropolymer (b), and a low content of tetrafluoroethylene unit tends to result in a low melting point of the crystalline fluoropolymer (b).

The melting point of the crystalline fluoropolymer (b) can be measured by precisely weighing approximately 10 mg of the crystalline fluoropolymer (b) having no history of being heated to a temperature of 300°C or higher, placing it in a dedicated aluminum pan, and measuring the melting point with TG/DTA (a simultaneous thermogravimetric - differential thermal analyzer). The aluminum pan is heated in the temperature range from 25°C to 600°C at 10°C/min in air to give a DTA curve, and a temperature corresponding to the peak in the resulting DTA curve is identified as the melting point of the polymer blend.

The melting point of the crystalline fluoropolymer (b) can be regarded as the melting point of the polymer blend when the crystalline fluoropolymer (b) is the only substance that shows a melting point in the polymer blend. Accordingly, the melting point of the crystalline fluoropolymer (b) can also be determined by measuring the melting point of the polymer blend.

The crystalline fluoropolymer (b) contained in the polymer blend of the present disclosure contains tetrafluoroethylene (TFE) unit and a nitrogen-containing crosslinking site.

The crystalline fluoropolymer (b) may contain a further monomer unit formed of a further monomer that is copolymerizable with TFE (excluding TFE unit and the monomer unit having a nitrogen-containing crosslinkable group).

The further monomer (excluding TFE and the monomer having a nitrogen-containing crosslinkable group) are not limited as long as it is copolymerizable with TFE, and examples include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; perfluoroalkylethylenes: and ethylene.

The content of the further monomer unit in the crystalline fluoropolymer (b) is preferably 0 to 0.10 mol%, more preferably 0.06 mol% or less, and even more preferably 0.02 mol% or less, and may be 0 mol%, based on all monomer units constituting the crystalline fluoropolymer (b).

The crystalline fluoropolymer (b) contained in the polymer blend of the present disclosure contains a nitrogen-containing crosslinking site. The nitrogen-containing crosslinking site is a site that contains at least one nitrogen atom and that is for the crystalline fluoropolymer (b) to form a crosslink.

The nitrogen-containing crosslinking site is preferably a nitrogen-containing crosslinkable group. The nitrogen-containing crosslinkable group is not limited as long as it contains at least one nitrogen atom and provides the fluoropolymer with a crosslinking site for forming a crosslink, and examples include a cyano group, an azide group, a sulfonyl azide group, a carbonyl azide group, and an amidine group. The nitrogen-containing crosslinkable group is preferably a cyano group because an article, the compression set of which at high temperatures is smaller and, moreover, an increased compression set of which after being used under severe conditions is more suppressed, can be obtained.

When the crystalline fluoropolymer (b) has a cyano group as a nitrogen-containing crosslinking site, the cyano group can create a crosslink by forming a triazine ring through cyclotrimerization or by forming an imidazole ring using a tetramine compound as a crosslinking agent. Forming a crosslink in this manner enables a suitable hardness and an excellent compression set property to be imparted to the article.

The nitrogen-containing crosslinking site can be introduced into the crystalline fluoropolymer by, for example, copolymerizing a monomer having a nitrogen-containing crosslinkable group when producing the crystalline fluoropolymer. Also, the nitrogen-containing crosslinking site can be introduced into the crystalline fluoropolymer by, for example, polymerizing a monomer in the presence of a nitrogen-containing chain transfer agent when producing the crystalline fluoropolymer. The nitrogen-containing chain transfer agent may be a compound represented by $I(CF_2)_nCN$ (n is an integer of 1 to 15). Moreover, the nitrogen-containing crosslinking site can be introduced into the crystalline fluoropolymer by, for example, reacting a functional group (such as -COF or -COOH) generated at the terminal of the crystalline fluoropolymer with ammonia after the crystalline fluoropolymer is produced.

The crystalline fluoropolymer (b) in one embodiment contains a monomer unit having a nitrogen-containing crosslinkable group.

The monomer having a nitrogen-containing crosslinkable group is preferably a monomer having a cyano group. Examples of the monomer having a cyano group (-CN group) include monomers represented by:

Formula: $CY^1_2=CY^1(CF_2)_n\text{-}CN$

wherein $Y^1$ is each independently a hydrogen atom or a fluorine atom, and n is an integer of 1 to 8;

Formula: $CF_2=CFCF_2Rf^8\text{-}CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2-CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)-CN$

wherein m is an integer of 0 to 5, and n is an integer of 0 to 5;

Formula: $CF_2=CF(OCF_2CF(CF_3))_mO(CF_2)_n-CN$

wherein m is an integer of 0 to 5, and n is an integer of 1 to 8;

Formula: $CF_2=CF(OCF_2CF(CF_3))_m-CN$

wherein m is an integer of 1 to 5;

Formula: $CF_2=CFOCF_2(CF(CF_3)OCF_2)_nCF(-CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)-CN$

wherein m is an integer of 0 to 5, and n is an integer of 1 to 3;

Formula: $CH_2=CFCF_2OCF(CF_3)OCF(CF_3)-CN$;

Formula: $CH_2=CFCF_2OCH_2CF_2-CN$;

Formula: $CF_2=CFO(CF_2CF(CF_3)O)_mCF_2CF(CF_3)-CN$

wherein m is an integer of 0 or more;

Formula: $CF_2=CFOCF(CF_3)CF_2O(CF_2)_n-CN$

wherein n is an integer of 1 or more;

Formula: $CF_2=CFOCF_2OCF_2CF(CF_3)OCF_2-CN$;

Formula: $CF_2=CFO(CF_2)_3CN$; and

Formula: $CF_2=CFO(CF_2)_5CN$.

One of these monomers can be used singly, and these monomers can also be used in any combination.

Among the above monomers, preferable is a monomer represented by:

Formula: $CF_2=CF(OCF_2CF(CF_3))_mO(CF_2)_n-CN$

wherein m is an integer of 0 to 5, n is an integer of 1 to 8; and $CF_2=CFOCF_2CF(CF_3)OCF_2CF_2CN$ is more preferable.

The content of the nitrogen-containing crosslinking site in the crystalline fluoropolymer (b) is preferably 0.5 to 3.0 mol%, more preferably 2.0 mol% or less, and even more preferably 1.5 mol% or less, based on all monomer units constituting the crystalline fluoropolymer (b) being 100 mol%.

The content of the nitrogen-containing crosslinking site can be measured by infrared spectroscopy (IR).

The content of the nitrogen-containing crosslinkable group in the crystalline fluoropolymer (b) is preferably 0.5 to 3.0 mol%, more preferably 2.0 mol% or less, and even more preferably 1.5 mol% or less, based on all monomer units constituting the crystalline fluoropolymer (b) being 100 mol%.

The content of the nitrogen-containing crosslinkable group can be measured by infrared spectroscopy (IR).

The content of the cyano group in the crystalline fluoropolymer (b) is preferably 0.5 to 3.0 mol%, more preferably 2.0 mol% or less, and even more preferably 1.5 mol% or less, based on all monomer units constituting the crystalline fluoropolymer (b) being 100 mol%.

The content of the cyano group can be measured by infrared spectroscopy (IR).

The content of the monomer unit having a nitrogen-containing crosslinkable group in the crystalline fluoropolymer (b) is preferably 0.5 to 3.0 mol%, more preferably 2.0 mol% or less, and even more preferably 1.5 mol% or less, based on all monomer units constituting the crystalline fluoropolymer (b) being 100 mol%.

The content of the monomer unit having a nitrogen-containing crosslinkable group can be measured by infrared spectroscopy (IR).

The content of the monomer unit having a cyano group in the crystalline fluoropolymer (b) is preferably 0.5 to 3.0 mol%, more preferably 2.0 mol% or less, and even more preferably 1.5 mol% or less, based on all monomer units constituting the crystalline fluoropolymer (b) being 100 mol%.

The content of the monomer unit having a cyano group can be measured by infrared spectroscopy (IR).

The crystalline fluoropolymer (b) is preferably a copolymer containing TFE unit and a monomer unit having a nitrogen-containing crosslinkable group, and more preferably a copolymer containing TFE unit and a monomer unit having a cyano group.

The content of TFE unit in the crystalline fluoropolymer (b) is preferably 97.0 to 99.5 mol%, more preferably 98.0 mol% or more, and even more preferably 98.5 mol% or more, based on all monomer units constituting the crystalline fluoropolymer (b) being 100 mol%.

(Polymer blend)

The polymer blend of the present disclosure has a melting point of 310 to 320°C. The melting point of the polymer blend is preferably 311°C or higher, more preferably 312°C or higher, and even more preferably 313°C or higher, and is preferably 319°C or lower, and more preferably 318°C or lower.

An excessively low melting point of the polymer blend may make it difficult to obtain an article, the compression set of which at high temperatures is small. An excessively high melting point of the polymer blend may make it difficult to obtain an article that unlikely has an increased compression set even after being used under severe conditions. The use of a polymer blend that do not show a distinct melting point may make it difficult to obtain an article having a suitable hardness.

The melting point of the polymer blend can be regulated to the above range by, for example, regulating the melting point of the crystalline fluoropolymer (b) and the content of the crystalline fluoropolymer (b).

The melting point of the polymer blend can be measured by precisely weighing approximately 10 mg of the polymer blend having no history of being heated to a temperature of 300°C or higher, placing it in a dedicated aluminum pan, and measuring the melting point with TG/DTA (a simultaneous thermogravimetric - differential thermal analyzer). The aluminum pan is heated in the temperature range from 25°C to 600°C at 10°C/min in air to give a DTA curve, and a temperature corresponding to the peak in the resulting DTA curve is identified as the melting point of the polymer blend.

The Mooney viscosity ML(1+20) of the polymer blend at 170°C is preferably 30 to 150, more preferably 50 or more, even more preferably 60 or more, and yet more preferably 70 or more, and is more preferably 130 or less and even more preferably 120 or less, because a suitable hardness can be imparted to an article, and an article, the compression set of which at high temperatures is smaller and, moreover, an increased compression set of which after being used under severe conditions is more suppressed, can be obtained.

The Mooney viscosity of the polymer blend can be regulated to the above range by regulating the Mooney viscosity of the fluoroelastomer (a) and the content of the fluoroelastomer (a).

The Mooney viscosity can be measured at 170°C in accordance with JIS K 6300 using a Mooney viscometer MV 2000E manufactured by ALPHA TECHNOLOGIES.

The glass transition temperature of the polymer blend is preferably -30°C or higher, more preferably -20°C or higher, and even more preferably -10°C or higher, and is preferably 10°C or lower, more preferably 5°C or lower, and even more preferably 0°C or lower, because a suitable hardness can be imparted to an article, and an article, the compression set of which at high temperatures is smaller and, moreover, an increased compression set of which after being used under severe conditions is more suppressed, can be obtained.

The glass transition temperature can be determined as follows: using a differential scanning calorimeter (X-DSC7000, manufactured by Hitachi High-Tech Science Corporation), a DSC curve is obtained by heating 3 mg of a sample at 20°C/min, and the temperature is read at the intermediate point of two intersections between each of the extension lines of the baselines before and after the secondary transition of the DSC curve and the tangent line at the inflection point of the DSC curve.

The polymer blend of the present disclosure contains the fluoroelastomer (a) and the crystalline fluoropolymer (b). The content of the crystalline fluoropolymer (b) in the polymer blend is 4.0 to 15.0% by mass based on the total mass of the fluoroelastomer (a) and the crystalline fluoropolymer (b).

The content of the crystalline fluoropolymer (b) in the polymer blend is preferably 4.2% by mass or more, more preferably 4.4% by mass or more, even more preferably 4.6% by mass or more, and is preferably 14.0% by mass or less, more preferably 13.0% by mass or less, and even more preferably 12.0% by mass or less.

An excessively low content of the crystalline fluoropolymer (b) in the polymer blend makes it difficult to impart a suitable hardness to an article. An excessively high content of the crystalline fluoropolymer (b) in the polymer blend results in an article that is excessively hard, makes it difficult to obtain an article, the compression set of which at high temperatures is small, or makes it difficult to obtain an article that unlikely has an increased compression set even after being used under severe conditions.

The content of the crystalline fluoropolymer (b) in the polymer blend can be measured by precisely weighing approximately 10 mg of the polymer blend having no history of being heated to a temperature of 300°C or higher, placing it in a dedicated aluminum pan, and measuring the content with TG/DTA (a simultaneous thermogravimetric - differential thermal analyzer). The aluminum pan is heated in the temperature range from 25°C to 600°C at 10°C/min in air to give a TG curve, and the rate of weight reduction is calculated from the resulting TG curve to determine the content of the crystalline fluoropolymer (b) in the polymer blend. Usually, the fluoroelastomer (a) in the polymer blend thermally degrades at a lower temperature than the crystalline fluoropolymer (b) does, and thus the respective rates of weight reduction resulting from the thermal degradation of the fluoroelastomer (a) and the crystalline fluoropolymer (b) can be verified from the TG curve.

If the production conditions of the polymer blend are known, the content of the crystalline fluoropolymer (b) in the polymer blend can also be calculated from the amounts of the feedstocks used.

The polymer blend of the present disclosure contains the fluoroelastomer (a) and the crystalline fluoropolymer (b). Moreover, the fluoroelastomer (a) contains tetrafluoroethylene unit, a fluoroalkyl vinyl ether unit, and a nitrogen-containing crosslinking site, and the crystalline fluoropolymer (b) contains tetrafluoroethylene unit and a nitrogen-containing crosslinking site.

Because an article, the compression set of which at high temperatures is smaller and, moreover, an increased compression set of which after being used under severe conditions is more suppressed, can be obtained, FAVE that constitutes the FAVE unit is preferably at least one selected from the group consisting of:

a fluoromonomer represented by general formula (11): $CF_2=CF-ORf^{13}$
wherein $Rf^{13}$ represents a perfluoroalkyl group having 1 to 8 carbon atoms;
a fluoromonomer represented by general formula (12):

$$CF_2=CFOCF_2ORf^{14}$$

wherein $Rf^{14}$ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms; and
a fluoromonomer represented by general formula (13):

$$CF_2=CFO(CF_2CF(Y^{15})O)_m(CF_2)_nF$$

wherein $Y^{15}$ represents a fluorine atom or a trifluoromethyl group, m is an integer of 1 to 4, and n is an integer of 1 to 4.

In particular, FAVE is preferably a fluoromonomer represented by general formula (11), more preferably at least one selected from the group consisting of $CF_2=CF-OCF_3$ (perfluoro(methyl vinyl ether) (PMVE)), $CF_2=CF-OCF_2CF_3$, and

$CF_2=CF-OCF_2CF_2CF_3$, and even more preferably $CF_2=CF-OCF_3$.

The content ratio of tetrafluoroethylene unit to fluoroalkyl vinyl ether unit in the polymer blend in terms of molar ratio (tetrafluoroethylene unit/fluoroalkyl vinyl ether unit) is preferably 50/50 to 70/30, more preferably 51/49 or more, even more preferably 52/48 or more, and yet more preferably 53/47 or more, and is more preferably 69/31 or less and even more preferably 68/32 or less. The content ratio of tetrafluoroethylene unit to fluoroalkyl vinyl ether unit in the polymer blend may be 54/46 or more and may be 65/35 or less or 60/40 or less in terms of molar ratio (tetrafluoroethylene unit/fluoroalkyl vinyl ether unit).

An excessively high molar ratio (tetrafluoroethylene unit/fluoroalkyl vinyl ether unit) may make it difficult to impart a suitable hardness to an article. An excessively low molar ratio may result in an article that is excessively hard, make it difficult to obtain an article, the compression set of which at high temperatures is small, or make it difficult to obtain an article that unlikely has an increased compression set even after being used under severe conditions.

The fluoroelastomer (a) and the crystalline fluoropolymer (b) contain a nitrogen-containing crosslinking site. The nitrogen-containing crosslinking site is a site that contains at least one nitrogen atom and that is for the fluoroelastomer (a) and the crystalline fluoropolymer (b) to form a crosslink.

The nitrogen-containing crosslinking site is preferably a nitrogen-containing crosslinkable group. The nitrogen-containing crosslinkable group is not limited as long as it contains at least one nitrogen atom and provides the fluoropolymer with a crosslinking site for forming a crosslink, and examples include a cyano group, an azide group, a sulfonyl azide group, a carbonyl azide group, and an amidine group. The nitrogen-containing crosslinkable group is preferably a cyano group because an article, the compression set of which at high temperatures is smaller and, moreover, an increased compression set of which after being used under severe conditions is more suppressed, can be obtained.

When the fluoroelastomer (a) and the crystalline fluoropolymer (b) have a cyano group as a nitrogen-containing crosslinking site, the cyano group can create a crosslink by forming a triazine ring through cyclotrimerization or by forming an imidazole ring using a tetramine compound as a crosslinking agent. Forming a crosslink in this manner enables a suitable hardness and an excellent compression set property to be imparted to the article.

The nitrogen-containing crosslinking site can be introduced into the crystalline fluoropolymer by, for example, copolymerizing a monomer having a nitrogen-containing crosslinkable group when producing the fluoroelastomer and the crystalline fluoropolymer. The nitrogen-containing crosslinking site can be introduced into the fluoroelastomer and the crystalline fluoropolymer by, for example, polymerizing a monomer in the presence of a nitrogen-containing chain transfer agent when producing the fluoroelastomer and the crystalline fluoropolymer. The nitrogen-containing chain transfer agent may be a compound represented by $I(CF_2)_nCN$ (n is an integer of 1 to 15). Moreover, the nitrogen-containing crosslinking site can be introduced into the fluoroelastomer and the crystalline fluoropolymer by, for example, reacting a functional group (such as -COF or -COOH) generated at the terminal of the fluoroelastomer and the crystalline fluoropolymer with ammonia after the fluoroelastomer and the crystalline fluoropolymer are produced.

The fluoroelastomer (a) and the crystalline fluoropolymer (b) in one embodiment contain a monomer unit having a nitrogen-containing crosslinkable group.

The monomer having a nitrogen-containing crosslinkable group is preferably a monomer having a cyano group. Examples of the monomer having a cyano group (-CN group) include monomers represented by:

Formula: $CY^1_2=CY^1(CF_2)_n-CN$

wherein $Y^1$ is each independently a hydrogen atom or a fluorine atom, and n is an integer of 1 to 8;

Formula: $CF_2=CFCF_2Rf^8-CN$

wherein $Rf^8$ is $-(OCF_2)_n-$ or $-(OCF(CF_3))_n-$, and n is an integer of 0 to 5;

Formula: $CF_2=CFCF_2(OCF(CF_3)CF_2)_m(OCH_2CF_2CF_2)_nOCH_2CF_2-CN$

wherein m is an integer of 0 to 5, and n is an integer of 0 to 5;

Formula: $CF_2=CFCF_2(OCH_2CF_2CF_2)_m(OCF(CF_3)CF_2)_nOCF(CF_3)-CN$

wherein m is an integer of 0 to 5, and n is an integer of 0 to 5;

Formula: $CF_2=CF(OCF_2CF(CF_3))_mO(CF_2)_n-CN$

wherein m is an integer of 0 to 5, and n is an integer of 1 to 8;

Formula: $CF_2=CF(OCF_2CF(CF_3))_m-CN$

wherein m is an integer of 1 to 5;

Formula: $CF_2=CFOCF_2(CF(CF_3)OCF_2)_nCF(-CN)CF_3$

wherein n is an integer of 1 to 4;

Formula: $CF_2=CFO(CF_2)_nOCF(CF_3)-CN$

wherein n is an integer of 2 to 5;

Formula: $CF_2=CFO(CF_2)_n-(C_6H_4)-CN$

wherein n is an integer of 1 to 6;

Formula: $CF_2=CF(OCF_2CF(CF_3))_nOCF_2CF(CF_3)-CN$

wherein n is an integer of 1 to 2;

Formula: $CH_2=CFCF_2O(CF(CF_3)CF_2O)_nCF(CF_3)-CN$

wherein n is an integer of 0 to 5;

Formula: $CF_2=CFO(CF_2CF(CF_3)O)_m(CF_2)_n-CN$

wherein m is an integer of 0 to 5, and n is an integer of 1 to 3;

Formula: $CH_2=CFCF_2OCF(CF_3)OCF(CF_3)-CN$;

Formula: $CH_2=CFCF_2OCH_2CF_2-CN$;

Formula: $CF_2=CFO(CF_2CF(CF_3)O)_mCF_2CF(CF_3)-CN$

wherein m is an integer of 0 or more;

Formula: $CF_2=CFOCF(CF_3)CF_2O(CF_2)_n-CN$

wherein n is an integer of 1 or more;

Formula: $CF_2=CFOCF_2OCF_2CF(CF_3)OCF_2-CN$;

Formula: $CF_2=CFO(CF_2)_3CN$; and

Formula: $CF_2=CFO(CF_2)_5CN$.

One of these monomers can be used singly, and these monomers can also be used in any combination.

Among the above monomers, preferable is a monomer represented by:

Formula: $CF_2=CF(OCF_2CF(CF_3))_mO(CF_2)_n-CN$

wherein m is an integer of 0 to 5, n is an integer of 1 to 8; and $CF_2=CFOCF_2CF(CF_3)OCF_2CF_2CN$ is more preferable.

The content of the nitrogen-containing crosslinking site in the polymer blend is 0.5 to 3.0 mol%, more preferably 2.0 mol% or less, and even more preferably 1.5 mol% or less, based on all monomer units constituting the fluoroelastomer (a) and the crystalline fluoropolymer (b) being 100 mol%.

The content of the nitrogen-containing crosslinking site can be measured by infrared spectroscopy (IR).

The content of the nitrogen-containing crosslinkable group in the polymer blend is preferably 0.5 to 3.0 mol%, more preferably 2.0 mol% or less, and even more preferably 1.5 mol% or less, based on all monomer units constituting the

fluoroelastomer (a) and the crystalline fluoropolymer (b) being 100 mol%.

The content of the nitrogen-containing crosslinkable group can be measured by infrared spectroscopy (IR).

The content of the cyano group in the polymer blend is preferably 0.5 to 3.0 mol%, more preferably 2.0 mol% or less, and even more preferably 1.5 mol% or less, based on all monomer units constituting the fluoroelastomer (a) and the crystalline fluoropolymer (b) being 100 mol%.

The content of the cyano group can be measured by infrared spectroscopy (IR).

The content of the monomer unit having a nitrogen-containing crosslinkable group in the polymer blend is preferably 0.5 to 3.0 mol%, more preferably 2.0 mol% or less, and even more preferably 1.5 mol% or less, based on all monomer units constituting the fluoroelastomer (a) and the crystalline fluoropolymer (b) being 100 mol%.

The content of the monomer unit having a nitrogen-containing crosslinkable group can be measured by infrared spectroscopy (IR).

The content of the monomer unit having a cyano group in the polymer blend is preferably 0.5 to 3.0 mol%, more preferably 2.0 mol% or less, and even more preferably 1.5 mol% or less, based on all monomer units constituting the fluoroelastomer (a) and the crystalline fluoropolymer (b) being 100 mol%.

The content of the monomer unit having a cyano group can be measured by infrared spectroscopy (IR).

The content of TFE unit and FAVE unit in the polymer blend is preferably 97.0 to 99.5 mol%, more preferably 98.0 mol% or more, and even more preferably 98.5 mol% or more, based on all monomer units constituting the fluoroelastomer (a) and the crystalline fluoropolymer (b) being 100 mol%.

(Method for producing polymer blend)

The polymer blend of the present disclosure can be produced by, for example, a production method involving mixing the fluoroelastomer (a) with the crystalline fluoropolymer (b), or a production method involving producing the fluoroelastomer (a) and the crystalline fluoropolymer (b) by two-stage polymerization.

The polymer blend of the present disclosure is preferably produced by preparing an aqueous dispersion containing the fluoroelastomer (a) and the crystalline fluoropolymer (b), and coagulating the fluoroelastomer (a) and the crystalline fluoropolymer (b) in the aqueous dispersion.

Even when a polymer blend is used that is obtained by a production method involving mixing solid matter of the fluoroelastomer (a) with solid matter of the crystalline fluoropolymer (b), an article that has a suitable hardness, the compression set of which at high temperatures is small, and that unlikely has an increased compression set even after being used under severe conditions can be obtained. However, it has now become clear that the polymer blend obtained by a production method involving coagulating the fluoroelastomer (a) and the crystalline fluoropolymer (b) in an aqueous dispersion provides an article, the compression set of which at high temperatures is smaller and, moreover, an increased compression set of which after the article is used under severe conditions is more suppressed than the article provided from the polymer blend obtained by a production method involving mixing solid matter of the fluoroelastomer (a) with solid matter of the crystalline fluoropolymer (b). Although the reason therefor is not clear, it is conjecture that the reaction between the nitrogen-containing crosslinking site of the fluoroelastomer (a) and the nitrogen-containing crosslinking site of the crystalline fluoropolymer (b) to form a mutually crosslinked structure proceeds smoothly.

Examples of the method for preparing an aqueous dispersion containing the fluoroelastomer (a) and the crystalline fluoropolymer (b) include a method involving mixing an aqueous dispersion containing the fluoroelastomer (a) with an aqueous dispersion containing the crystalline fluoropolymer (b), a method involving mixing a powder of the fluoroelastomer (a) with an aqueous dispersion containing the crystalline fluoropolymer (b), and a method involving mixing an aqueous dispersion containing the fluoroelastomer (a) with a powder of the crystalline fluoropolymer (b). In particular, preferable is a method involving mixing an aqueous dispersion containing the fluoroelastomer (a) with an aqueous dispersion containing the crystalline fluoropolymer (b).

Examples of the method for coagulating the fluoroelastomer (a) and the crystalline fluoropolymer (b) in an aqueous dispersion include a method involving mixing the aqueous dispersion with a coagulating agent and a method involving freezing the aqueous dispersion. The coagulating agent may be a known coagulating agent such as acid, and examples include aluminum salts, calcium salts and magnesium salts, organic coagulating agents such as ammonium acetate and ammonium carbonate, and inorganic acid coagulating agents such as hydrochloric acid, nitric acid, hydrofluoric acid, sulfuric acid and trifluoroacetic acid.

The coagulate obtained by coagulation may be washed with water to remove small amounts of impurities such as buffers and salts present in the coagulate, and then the washed coagulate may be dried in a hot-air oven or a vacuum dryer, to thereby prepare the polymer blend.

The form of the polymer blend obtained after coagulation is not limited, and may be gum, crumb, powder, pellet, or the like, and is preferably gum or crumb. Gum is a small mass of particles made of the polymer blend, and crumb is in the form of an amorphous mass resulting from that the fluoroelastomer (a) in the polymer blend is unable to maintain a small particulate form as gum at room temperature and particles are fused to each other.

Among the methods for producing the polymer blend of the present disclosure, the production method involving mixing the fluoroelastomer (a) with the crystalline fluoropolymer (b) is preferably a production method comprising:

(1-1) polymerizing tetrafluoroethylene, fluoroalkyl vinyl ether, and a monomer having a nitrogen-containing crosslinkable group in the presence of an aqueous medium to prepare an aqueous dispersion containing the fluoroelastomer (a);
(1-2) polymerizing tetrafluoroethylene and a monomer having a nitrogen-containing crosslinkable group in the presence of an aqueous medium to prepare an aqueous dispersion containing the crystalline fluoropolymer (b);
(1-3) mixing the aqueous dispersion containing the fluoroelastomer (a) with the aqueous dispersion containing the crystalline fluoropolymer (b) to prepare an aqueous dispersion containing the fluoroelastomer (a) and the crystalline fluoropolymer (b); and
(1-4) coagulating the fluoroelastomer (a) and the crystalline fluoropolymer (b) in the aqueous dispersion to give a polymer blend.

Preparation of the aqueous dispersion containing the fluoroelastomer (a) and the aqueous dispersion containing the crystalline fluoropolymer (b) can be carried out by known polymerization methods.
Among the methods for producing the polymer blend of the present disclosure, the method involving preparing the fluoroelastomer (a) and the crystalline fluoropolymer (b) by two-stage polymerization is preferably a production method comprising:

(2-1) polymerizing tetrafluoroethylene and a monomer having a nitrogen-containing crosslinkable group in the presence of an aqueous medium to prepare an aqueous dispersion containing the crystalline fluoropolymer (b); then
(2-2) polymerizing tetrafluoroethylene, fluoroalkyl vinyl ether, and a monomer having a nitrogen-containing crosslinkable group in the presence of the crystalline fluoropolymer (b) and an aqueous medium to prepare an aqueous dispersion containing the fluoroelastomer (a) and the crystalline fluoropolymer (b); and
(2-3) coagulating the fluoroelastomer (a) and the crystalline fluoropolymer (b) in the aqueous dispersion.

In the above production method, the polymerization in step (2-1) and the polymerization in step (2-2) can be carried out in the same reaction vessel or different reaction vessels. When carrying out the polymerizations in the same reaction vessel, the polymerization in step (2-1) may be terminated before initiating the polymerization in step (2-2), or the polymerization in the step (2-2) may be initiated without terminating the polymerization in step (2-1).
In one embodiment of the above production method, (2-1) the aqueous dispersion containing the crystalline fluoropolymer (b) is prepared in a reaction vessel, and then (2-2) while continuing the polymerization reaction in the reaction vessel, fluoroalkyl vinyl ether is introduced into the reaction vessel to polymerize tetrafluoroethylene, fluoroalkyl vinyl ether, and a monomer having a nitrogen-containing crosslinkable group.
Thus, by producing a polymer blend through continuous polymerization reactions, a polymer blend can be produced that can impart a suitable hardness to an article and that can provide an article, the compression set of which at high temperatures is smaller and the increased compression set of which after the article is used under severe conditions is more suppressed.
The polymerization in step (2-1) and the polymerization in step (2-2) are preferably carried out using an emulsion polymerization method. In one embodiment, the polymerizations are carried out in the presence of a polymerization initiator, a surfactant, and an aqueous medium.
The polymerization initiator may be an oil-soluble radical polymerization initiator or a water-soluble radical polymerization initiator.
The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; dialkyl peroxides such as di-t-butyl peroxide; and di[perfluoro (or fluorochloro) acyl]peroxides such as di(ω-hydroperfluorohexanoyl)peroxide, di(ω-hydro-dodecafluoroheptanoyl)peroxide, di(ω-hydro-tetradecafluorooctanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydro-hexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.
The water-soluble radical polymerization initiator may be a known water-soluble peroxide, and examples include ammonium salts, potassium salts, and sodium salts of persulfuric acid, perboric acid, perchloric acid, perphosphoric acid,

percarbonic acid, and the like, t-butyl permaleate, and t-butyl hydroperoxide. A reducing agent such as a sulfite may also be contained, and may be used in an amount of 0.1 to 20 times the amount of the peroxide.

The amount of the polymerization initiator added is not limited, and the polymerization initiator is added in an amount such that the polymerization rate is not significantly decreased (e.g., a concentration of several ppm in water) or more at once in the initial stage of polymerization, or such an amount of the polymerization initiator is added successively or continuously. The upper limit is within a range where the polymerization reaction heat can be removed from the apparatus surface.

The surfactant may be a nonionic surfactant, an anionic surfactant, a cationic surfactant, or the like, and fluorine-based surfactants such as those used in International Publication No. WO 2000/029479, U.S. Patent Application Publication No. 2007/0015865, and Japanese Patent Laid-Open No. 2014-540475 are also usable. The amount (based on the solvent) is preferably 10 ppm by mass to 20% by mass, more preferably 10 ppm by mass to 10% by mass, even more preferably 10 ppm by mass to 7% by mass, and particularly preferably 50 ppm by mass to 5% by mass.

The surfactant may be a reactive emulsifier. The reactive emulsifier is not limited as long as it is a compound having one or more unsaturated bonds and one or more hydrophilic groups, and examples include $CH_2=CFCF_2OCF(CF_3)CF_2OCF(CF_3)COONH_4$, $CH_2=CFCF_2CF(CF_3)OCF_2CF_2COONH_4$, and $CF_2=CFOCF_2CF(CF_3)OCF(CF_3)COONH_4$. The amount (based on the solvent) is preferably 10 to 5,000 ppm by mass, and more preferably 50 to 5,000 ppm by mass.

In place of a surfactant, a polymer of a compound having one or more unsaturated bonds and one or more hydrophilic groups may be used. Examples of such polymers include homopolymers of compounds such as $CH_2=CFCF_2OCF(CF_3)CF_2OCF(CF_3)COONH_4$, $CH_2=CFCF_2CF(CF_3)OCF_2CF_2COONH_4$, and $CF_2=CFOCF_2CF(CF_3)OCF(CF_3)COONH_4$. The amount (based on the solvent) is preferably 10 ppm by mass to 10% by mass, more preferably 50 ppm by mass to 5% by mass, and even more preferably 50 ppm by mass to 2% by mass.

The aqueous medium is preferably a medium that does not have a chain transfer property. Examples of the aqueous medium include water, a mixture of water and a water-soluble organic solvent, and a mixture of water and a non water-soluble organic solvent.

The polymerizations may also be carried out in the presence of a chain transfer agent. The chain transfer agent may be, in addition to the above-described nitrogen-containing chain transfer agent, an iodine compound or a bromine compound. Examples of the polymerization method carried out using an iodine compound or a bromine compound include a method in which emulsion polymerization is carried out in an aqueous medium under pressure in the presence of an iodine compound or a bromine compound in a substantially oxygen-free state (an iodine transfer polymerization method). Representative examples of the iodine compound or the bromine compound to be used include compounds represented by the general formula:

$$R^{21}I_xBr_y$$

wherein x and y are each an integer of 0 to 2 and satisfy $1 \leq x + y \leq 2$; and $R^{21}$ is a saturated or unsaturated fluorohydrocarbon group or chlorofluorohydrocarbon group having 1 to 16 carbon atoms, or a hydrocarbon group having 1 to 3 carbon atoms, and optionally containing an oxygen atom. By using an iodine compound or a bromine compound, an iodine atom or a bromine atom is introduced into the polymer and functions as a cross-linking point.

Examples of the iodine compound and the bromine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. One of these compounds may be used singly, or these compounds may be used as a combination.

Among these, 1,4-diiodoperfluorobutane, 1,6-diiodoperfluorohexane, and 2-iodoperfluoropropane are preferably used from the viewpoint of polymerization reactivity, crosslinking reactivity, availability, and the like.

The polymerization temperature, the polymerization pressure, and the polymerization time vary depending on the type of solvent and polymerization initiator, and may be -15 to 150°C, atmospheric pressure to 12 MPa, and 1 to 24 hours, respectively. When the polymerization initiator is an oil-soluble radical polymerization initiator, the polymerization temperature is preferably 30 to 95°C. When the polymerization initiator is a water-soluble radical polymerization initiator, the polymerization temperature is preferably 0 to 100°C, and more preferably 10 to 95°C.

(Crosslinkable composition)

A crosslinkable composition can be prepared by mixing the above-described polymer blend with at least one

selected from the group consisting of an inorganic nitride, an organotin compound, an ammonia-generating compound, and a cross-linking agent. An article (a crosslinked product) can be obtained by crosslinking the crosslinkable composition containing the above-described polymer blend and at least one selected from the group consisting of an inorganic nitride, an organotin compound, an ammonia-generating compound, and a cross-linking agent.

The inorganic nitride is not limited, and examples include silicon nitride ($Si_3N_4$), lithium nitride, titanium nitride, aluminum nitride, boron nitride, vanadium nitride, and zirconium nitride. Among these, silicon nitride can provide nano-sized fine particles and is thus preferable.

Examples of the organotin compound include tetraphenyltin and triphenyltin.

The ammonia-generating compound is preferably a compound that generates ammonia at 40 to 330°C.

The ammonia-generating compound is preferably urea, a derivative thereof, or an ammonium salt, more preferably urea or an ammonium salt, and even more preferably urea. The ammonium salt may be either an organic ammonium salt or an inorganic ammonium salt. The ammonia-generating compound may be a compound that reacts with a small amount of water to generate ammonia.

Examples of the urea derivative include biurea, thiourea, urea hydrochloride, and biuret.

Examples of the organic ammonium salt include non-fluorine carboxylic or sulfonic acid ammonium salts such as ammonium benzoate, ammonium adipate, and ammonium phthalate.

Examples of the inorganic ammonium salt include the compounds described in Japanese Patent Laid-Open No. 9-111081, such as ammonium sulfate, ammonium carbonate, ammonium nitrate, and ammonium phosphate.

In addition, examples of the ammonia-generating compound also include acetaldehyde ammonia, hexamethylenetetramine, formamidine, formamidine hydrochloride, formamidine acetate, t-butyl carbamate, benzyl carbamate, and phthalamide.

Examples of the cross-linking agent include cross-linking agents used in peroxide cross-linking, polyol cross-linking, polyamine cross-linking, triazine cross-linking, oxazole cross-linking, imidazole cross-linking, and thiazole cross-linking.

The cross-linking agent used in peroxide crosslinking may be any organic peroxide that can easily generate peroxy radicals in the presence of heat or a redox system, and specific examples include 1,1-bis(t-butylperoxy)-3,5,5-trimethylcyclohexane, 2,5-dimethylhexane-2,5-dihydroperoxide, di-t-butyl peroxide (PERBUTYL D), t-butyl cumyl peroxide (PERBUTYL C), dicumyl peroxide (PERCUMYL D, PERCUMYL D-40, PERCUMYL D-40MB(T)), α,α-bis(t-butylperoxy)-p-diisopropylbenzene, 2,5-dimethyl-2,5-di(t-butylperoxy)hexane (PERHEXA 25B, PERHEXA 25B-40), 2,5-dimethyl-2,5-di(t-butylperoxy)-hexyne-3 (PERHEXYNE 25B, PERHEXYNE 25B-40), benzoyl peroxide, t-butylperoxybenzene, 2,5-dimethyl-2,5-di(benzoylperoxy)hexane (PERHEXA 25Z), t-butyl peroxymaleate (t-butyl MA), t-butyl peroxyisopropylcarbonate (PERBUTYL I-75), methyl ethyl ketone peroxide (PERMEK D (DR), PERMEK H (HR, HY), PERMEK N (NR, NY), PERMEK S (SR), PERMEK F (FR), PERMEK G (GR, GY)), cyclohexanone peroxide (PERHEXA H), acetylacetone peroxide (PERCURE AH, AL), 1,1-di(t-hexylperoxy)-3,3,5-trimethylcyclohexane (PERHEXA TMH), 1,1-di(t-hexylperoxy)cyclohexane (PERHEXA HC), 1,1-di(t-butylperoxy)-2-methylcyclohexane (PERHEXA MC), 1,1-di(t-butylperoxy)cyclohexane (PERHEXA C-80 (S), PERHEXA C-75 (EB), PERHEXA C (C), PERHEXA C-40, PERHEXA C-40MB (S)), 2,2-di(t-butylperoxy)butane (PERHEXA 22), butyl 4,4-di-(t-butylperoxy)pentanoate (PERHEXA V, PERHEXA V-40 (F)), 2,2-di(4,4-di-(t-butylperoxy)cyclohexyl)propane (PERTETRA A), p-menthane hydroperoxide (PERMENTA H), diisopropylbenzene hydroperoxide (PERCUMYL P), 1,1,3,3-tetramethylbutyl hydroperoxide (PEROCTA H), cumene hydroperoxide (PERCUMYL H-80), t-butyl hydroperoxide (PERBUTYL H-69), di(2-t-butylperoxyisopropyl) benzene (PERBUTYL P, PERBUTYL P-40, PEROXYMON F-40, PERBUTYL P-40MB(K)), di-t-hexyl peroxide (PERHEXYL D), diisobutyryl peroxide (PEROYL IB), di(3,5,5-trimethylhexanoyl) peroxide (PEROYL 355 (S)), dilauroyl peroxide (PEROYL L), disuccinic acid peroxide (PEROYL SA), di-(3-methylbenzoyl) peroxide, benzoyl (3-methylbenzoyl) peroxide, and a polymer blend of dibenzoyl peroxides (NYPER BMT-K40, NYPER BMT-M), dibenzoyl peroxide (NYPER BW, NYPER BO, NYPER FF, NYPER BS, NYPER E, NYPER NS), di(4-methylbenzoyl) peroxide (NYPER PMB), di-n-propyl peroxydicarbonate (PEROYL NPP-50M), diisopropyl peroxydicarbonate (PEROYL IPP-50, PEROYL IPP-27), di(4-t-butylcyclohexyl) peroxydicarbonate (PEROYL TCP), di(2-ethylhexyl) peroxydicarbonate (PEROYL OPP), di-sec-butyl peroxydicarbonate (PEROYL SBP), cumyl peroxyneodecanoate (PERCUMYL ND, PERCUMYL ND-50E), 1,1,3,3-tetramethylbutyl peroxyneodecanoate (PEROCTA ND, PEROCTA ND-50E), t-hexyl peroxyneodecanoate (PERHEXYL ND, PERHEXYL ND-50E), t-butyl peroxyneodecanoate (PERBUTYL ND, PERBUTYL ND-50E), t-butyl peroxyneoheptanoate (PERBUTYL NHP), t-hexyl peroxypivalate (PERHEXYL PV, PERHEXYL PV-50E), t-butyl peroxypivalate (PERBUTYL PV, PERBUTYL PV-40E), 1,1,3,3-tetramethylbutyl peroxy-2-ethylhexanoate (PEROCTA O), 2,5-dimethyl-2,5-di(2-ethylhexanoylperoxy)hexane (PERHEXA 25O), t-hexyl peroxy-2-ethylhexanoate (PERHEXYL O, PERCURE HO(N)), t-butyl peroxy-2-ethylhexanoate (PERBUTYL O, PERCURE O), t-hexyl peroxyisopropylmonocarbonate (PERHEXYL I), t-butyl peroxy-3,5,5-trimethylhexanoate (PERBUTYL 355), t-butyl peroxylaurate (PERBUTYL L), t-butyl peroxy-2-ethylhexylmonocarbonate (PERBUTYL E), t-hexyl peroxybenzoate (PERHEXYL Z), t-butyl peroxyacetate (PERBUTYL A), a polymer blend of t-butyl peroxy-3-methylbenzoate and t-butyl peroxybenzoate (PERBUTYL ZT), t-butyl peroxybenzoate (PERBUTYL Z), t-butyl peroxyallylmonocarbonate (PEROMER AC), 3,3',4,4'-tetra(t-butylperoxycarbonyl)benzophenone (BTTB-25), and 2,3-dimethyl-2,3-diphenylbutane (NOFMER BC-90). In particular, dialkyl-type cross-linking agents are preferable. Furthermore, 2,5-dimethyl-2,5-di(t-butylperoxy)hexane is particularly preferable. In general, the type and amount of organic peroxide to be used are selected in consideration of the amount of active -O-O- and decomposition temperature.

The cross-linking aid that can be used in this case may be a compound having reactivity with a peroxy radical and a polymer radical, and examples include polyfunctional compounds having a functional group such as $-CH=CH_2$, $-CH_2CH=CH_2$, $-CF=CF_2$, $-C(CF_3)=CF_2$, $-C(CH_3)=CF_2$, $-CF=CF(CF_3)$, $-CF=CF(CH_3)$, $-C(C_6H_5)=CF_2$, $-CF=CF(C_6H_5)$, $-CH=CF_2$, $-CF=CHF$, $-C(CF_3)=CHF$, $-CF=CH(CF_3)$, and - $CH=CF(CF_3)$, wherein "$C_6H_5$" represents a phenyl group. Specific examples include triallyl cyanurate, triallyl isocyanurate (TAIC), triacrylformal, triallyl trimellitate, N,N'-n-phenylenebismaleimide, dipropagyl terephthalate, diaryl phthalate, tetraallyl terephthalateamide, triallyl phosphate, bismaleimide, fluorinated triallyl isocyanurate (1,3,5-tris(2,3,3-trifluoro-2-propenyl)-1,3,5-triazine 2,4,6-trione), tris(diallylamine)-S-triazine, triallyl phosphite, N,N-(diallylacrylamide), and 1,6-divinyldodecafluorohexane.

The cross-linking aid to be used together with the peroxide cross-linking agent may also be a compound represented by general formula (31):

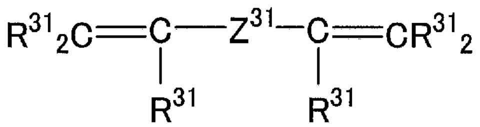

wherein six $R^{31}$ groups are each independently H, a halogen atom, or an optionally halogenated group having 1 to 5 carbon atoms and optionally having an ether bond intercalated therein, and $Z^{31}$ is an optionally halogenated, linear or branched alkylene group having 1 to 18 carbon atoms and optionally containing a heteroatom, a cycloalkylene group, or a (per) fluoropolyoxyalkylene group.

Examples of the compound represented by general formula (31) include:

a compound represented by general formula (32):

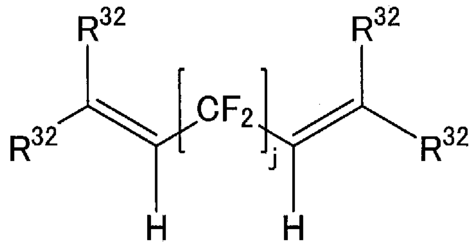

wherein j is an integer of 2 to 10, preferably an integer of 4 to 8; four $R^{32}$ groups are each independently H, F, or an alkyl group or (per)fluoroalkyl group having 1 to 5 carbon atoms;

a compound represented by general formula (33):

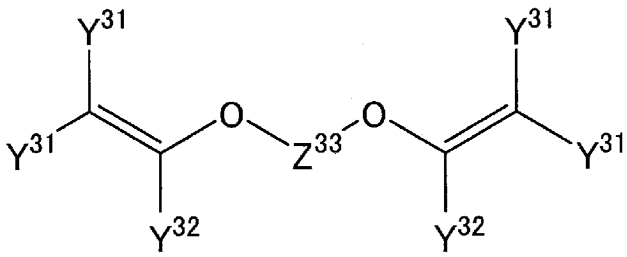

wherein $Y^{31}$ is each independently F, Cl, or H; $Y^{32}$ is each independently F, Cl, H, or $OR^{33}$ (where $R^{33}$ is an optionally partially, substantially, or fully fluorinated or chlorinated, branched or linear alkyl group); $Z^{33}$ is an optionally fluorinated divalent group having 2 to 10 carbon atoms and optionally having an ether bond intercalated therein, and $Z^{33}$ is preferably a $-(CF_2)_m-$ group wherein m is an integer of 3 to 5; and the compound represented by general formula (33) is preferably $F_2C=CF-O-(CF_2)_5-O-CF=CF_2$; and

a compound represented by general formula (34):

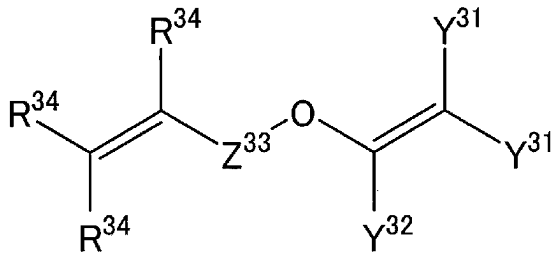

wherein $Y^{31}$, $Y^{32}$, and $Z^{33}$ are as defined above, and each $R^{34}$ is independently H, F, or an alkyl group or (per) fluoroalkyl group having 1 to 5 carbon atoms.

Examples of the cross-linking agent or the cross-linking aid to be used together with the peroxide cross-linking agent may also include a compound having at least one structure represented by general formula (35):

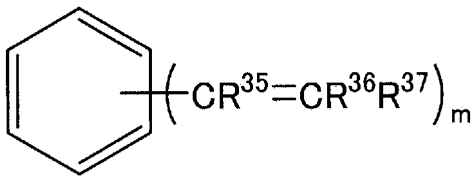

wherein $R^{35}$ to $R^{37}$ are each independently a hydrogen atom, a fluorine atom, an alkyl group, a fluorinated alkyl group, or a substituted or unsubstituted aryl group, and at least one of $R^{35}$ to $R^{37}$ is a fluorine atom or a group containing a fluorine atom; m is an integer of 1 to 5; when m is 2 or more, m $R^{35}$ to $R^{37}$ may be the same as or different from each other; and the hydrogen atoms of the benzene ring are optionally substituted. When m is 1, the compound preferably has 2 or more such structures.

Examples of the compound having a structure represented by general formula (36) include:

a compound represented by general formula (36):

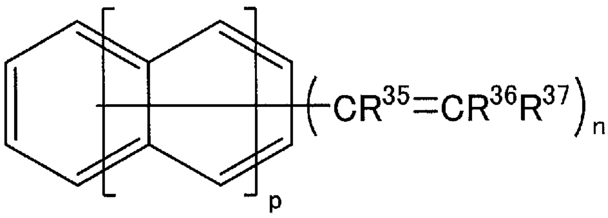

wherein $R^{35}$ to $R^{37}$ are as defined above; p is an integer of 0 to 2; and n is an integer of 2 to 6); and a compound represented by the general formula (37):

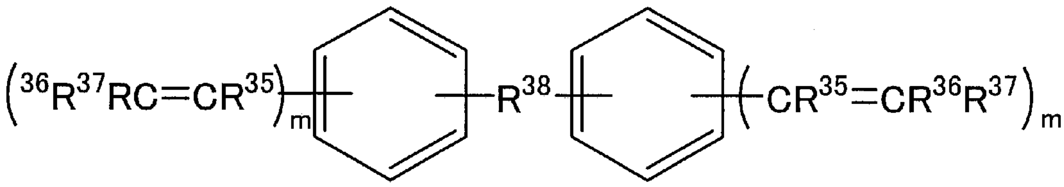

wherein $R^{35}$ to $R^{37}$ are as defined above, $R^{38}$ is a single bond, $-SO_2-$, -O-, -S-, -CO-, a heteroatom-containing group, a substituted or unsubstituted alkylene group, a substituted or unsubstituted cycloalkylene group, or a substituted or unsubstituted arylene group, m is an integer of 1 to 5, and these groups may be partially or fully fluorinated.

The heteroatom-containing group is not limited as long as it is a divalent group containing a heteroatom. Examples of the heteroatom include an oxygen atom, a nitrogen atom, a sulfur atom, a boron atom, and a phosphorus atom.

Examples of the cross-linking agent used in polyol crosslinking include polyhydric alcohol compounds such as bisphenol A and bisphenol AF.

Examples of the cross-linking agent used in polyamine crosslinking include polyvalent amine compounds such as hexamethylenediamine carbamate, N,N'-dicinnamylidene-1,6-hexanediamine, and 4,4'-bis(aminocyclohexyl) methane carbamate.

Examples of the cross-linking agent used in oxazole crosslinking, imidazole crosslinking, and thiazole cross-linking include:

a bisdiaminophenyl cross-linking agent, a bisaminophenol cross-linking agent, and a bisaminothiophenol cross-linking agent represented by general formula (41):

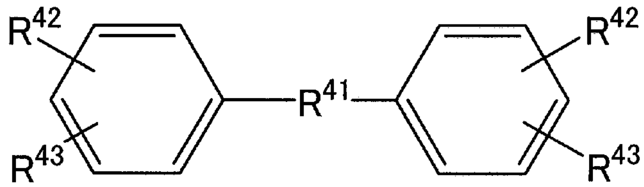

wherein $R^{41}$ is $-SO_2-$, -O-, -CO-, an alkylene group having 1 to 6 carbon atoms, a perfluoroalkylene group having 1 to 10 carbon atoms, a single bond, or a group represented by:

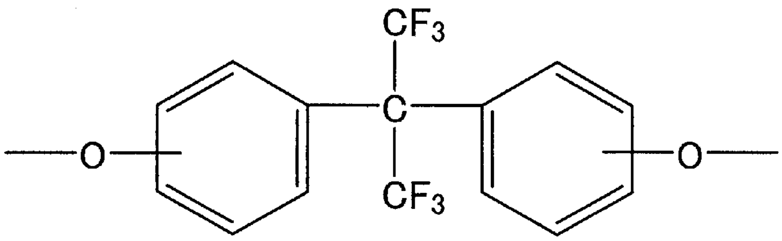

one of $R^{42}$ and $R^{43}$ is $-NH_2$ and the other is $-NHR^{44}$, $-NH_2$, - OH, or -SH, $R^{44}$ is a hydrogen atom, a fluorine atom, or a monovalent organic group, preferably $R^{42}$ is $-NH_2$ and $R^{43}$ is - $NHR^{44}$; specific preferable examples of the alkylene group having 1 to 6 carbon atoms include a methylene group, an ethylene group, a propylene group, a butylene group, a pentylene group, and a hexylene group; examples of the perfluoroalkylene group having 1 to 10 carbon atoms include:

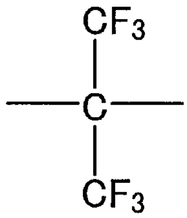

; and these compounds are known as bisdiaminophenyl compounds as exemplified in Japanese Patent Publication No. 2-59177, Japanese Patent Laid-Open No. 8-120146, and the like;
a bisamidrazone cross-linking agent represented by general formula (42):

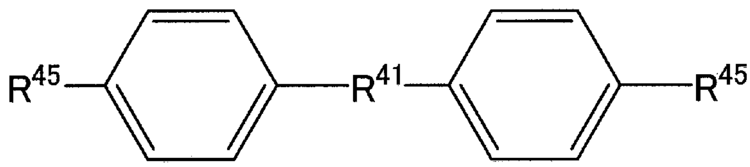

wherein $R^{41}$ is defined as described above, and $R^{45}$ is each independently any of the following formulas:

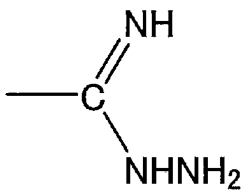
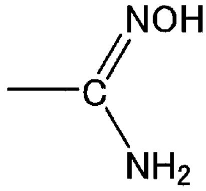

an amidrazone cross-linking agent represented by general formula (43):

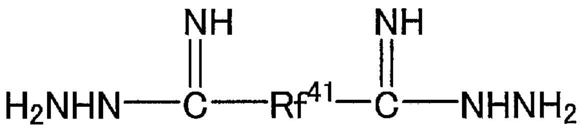

wherein $Rf^{41}$ is a perfluoroalkylene group having 1 to 10 carbon atoms; and
a bisamidoxime-based cross-linking agent represented by general formula (44):

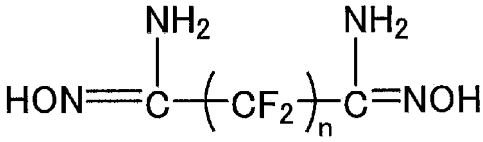

wherein n is an integer of 1 to 10; and
a compound represented by general formula (45): $HN=CR^{45}R^{46}$, wherein $R^{45}$ is selected from the group consisting of H, $NH_2$, and $NHR^{47}$; $R^{46}$ is selected from the group consisting of Ph, $SO_2H$, $NR^{48}R^{49}$, 2-pyridine, and $CH_2CONH_2$; $R^{47}$ is selected from the group consisting of Ph, $NH_2$, and CN; $R^{48}$ is selected from the group consisting of H, NHPh, $CH_2CONH_2$, a linear alkyl group having 1 to 8 carbon atoms, and a branched alkyl group having 1 to 8 carbon atoms; and $R^{49}$ is selected from the group consisting of Ph, $COOC(CH_3)_3$, $NH_2$, $CH_2COOH$, $CSNH_2$, $CNHNH_3^+Cl^-$, p-phenyl-CN,

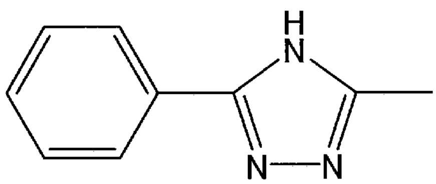

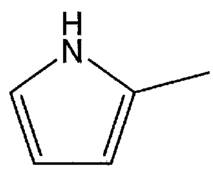

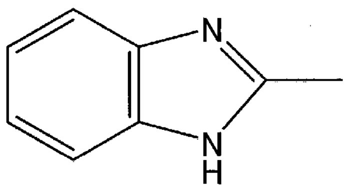

and COPh.

Examples of the cross-linking agent may also include a cross-linking agent represented by general formula (46): $X^{41}-(CH_2)_n-R^{50}-(CH_2)_m-X^{41}$, wherein $X^{41}$ is each independently an alkyne group, a nitrile group, or $Y^{41}{}_pN_3$ (wherein $Y^{41}$ is SO, $SO_2$, $C_6H_4$, or CO and p is 0 or 1); n and m are each independently an integer of 1 to 4; and $R^{50}$ is selected from the group consisting of:

i) a fluoroalkylene group having 3 to 10 carbon atoms,
ii) a fluoralkoxylene group having 3 to 10 carbon atoms,
iii) a substituted arylene group,
iv) an oligomer containing a copolymerization unit of vinylidene fluoride and perfluoro(methylvinylether),
v) an oligomer containing a copolymerization unit of vinylidene fluoride and hexafluoropropylene,
vi) an oligomer containing a copolymerization unit of tetrafluoroethylene and perfluoro(methylvinylether), and
vii) an oligomer containing a copolymerization unit of tetrafluoroethylene and a hydrocarbon olefin.

Examples of particularly preferable cross-linking agents include a compound having multiple 3-amino-4-hydroxyphenyl groups or 3-amino-4-mercaptophenyl groups, and a compound represented by general formula (47):

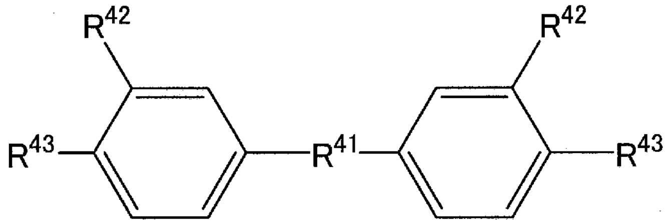

wherein $R^{41}$, $R^{42}$, and $R^{43}$ are as defined above, and specific examples include 2,2-bis(3-amino-4-hydroxyphenyl) hexafluoropropane (generic name: bis(aminophenol) AF), 2,2-bis(3-amino-4-mercaptophenyl)hexafluoropropane, tetraaminobenzene, bis-3,4-diaminophenylmethane, bis-3,4-diaminophenyl ether, 2,2-bis(3,4-diaminophenyl)hexafluoropropane, 2,2-bis[3-amino-4-(N-phenylamino)phenyl]hexafluoropropane, 2,2-bis[3-amino-4-(N-methylamino)phenyl]hexafluoropropane, 2,2-bis[3-amino-4-(N-ethylamino)phenyl]hexafluoropropane, 2,2-bis[3-amino-4-(N-propylamino)phenyl]hexafluoropropane, 2,2-bis[3-amino-4-(N-perfluorophenylamino)phenyl]hexafluoropropane, and 2,2-bis[3-amino-4-(N-benzylamino)phenyl]hexafluoropropane.
Among these, the cross-linking agent is preferably 2,2-bis[3-amino-4-(N-phenylamino)phenyl]hexafluoropropane from the viewpoint of heat resistance, steam resistance, amine resistance, and good crosslinkability.
The content of the at least one selected from the group consisting of an inorganic nitride, an organotin compound, an ammonia-generating compound, and a cross-linking agent is preferably 0.05 parts by mass or more, more preferably 0.1 parts by mass or more, even more preferably 0.2 parts by mass or more, and particularly preferably 0.3 parts by mass or more, and is preferably 10 parts by mass or less, more preferably 5.0 parts by mass or less, even more preferably 2.0 parts by mass or less, and particularly preferably 1.0 part by mass or less, based on 100 parts by mass of the polymer blend.

(Further components)

The crosslinkable composition may contain further components other than the crosslinking agent.
An example of the further components may be a filler.
Examples of the filler include imide-based fillers having an imide structure, such as polyimide, polyamideimide, and polyetherimide; organic fillers made of engineering plastics, such as polyarylate, polysulfone, polyethersulfone, polyphenylene sulfide, polyether ether ketone, polyether ketone, and polyoxybenzoate; metal oxide fillers such as silicon oxide, aluminum oxide, and yttrium oxide; metal carbide fillers such as silicon carbide and aluminum carbide; metal nitride fillers such as silicon nitride and aluminum nitride, and inorganic fillers such as carbon black, aluminum fluoride, and carbon fluoride.
Among these, carbon black, aluminum oxide, silicon oxide, yttrium oxide, silicon carbide, silicon nitride, polyimide, and fluorocarbon are preferable from the viewpoint of a shielding effect against various plasmas.
One of the above inorganic fillers and organic fillers may be used singly, or two or more may be used as a combination.
Especially in the field where high purity and noncontaminating properties are not required, a commonly used additive that is added to the composition as needed, such as a processing aid, a plasticizer, or a colorant, may be added, and one or more conventional cross-linking agents and cross-linking aids different from those described above may also be added.
The crosslinkable composition may contain an organic basic compound. Examples of the organic basic compound include:
octadecylamine of the formula: $CH_3(CH_2)_{17}$-$NH_2$; erucamide of the formula: $H_2N$-C(O)-$(CH_2)_{11}$-CH=CH-$(CH_2)_7CH_3$ oleamide of the formula: $H_2N$-C(O)-$(CH_2)_7$-CH=CH-$(CH_2)_7CH_3$; hexamethylenediamine of the formula: $H_2N$-$(CH_2)_6$-$NH_2$; and 1,8-diazabicycloundec-7-ene (DBU) of the formula:

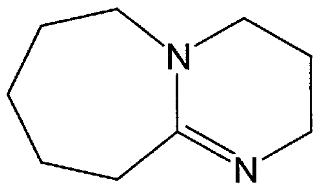

The crosslinkable composition can be prepared by mixing the polymer blend with further components such as a cross-linking agent. The mixing can be carried out using an ordinary polymer processing machine such as an open roll, a Banbury mixer, a kneader or closed mixer.
The crosslinkable composition can be suitably used as a molding material for obtaining an article by crosslinking and molding.

(Article)

The article of the present disclosure can be obtained by crosslinking the above-described crosslinkable composition. The article of the present disclosure has a suitable hardness, the compression set of the article at high temperatures is small, and, moreover, the compression set of the article even after the article is used under severe conditions is unlikely increased.
The present disclosure provides an article that has a compression set measured after the article is left to stand at 300°C for 70 hours of 50% or less, a compression set measured after the article is left to stand at 200°C for 70 hours and then left to stand at 70°C for 70 hours of less than 50%, and a hardness measured in accordance with ASTM D2240 of 65 or more. The article of the present disclosure has a suitable hardness, the compression set of the article at high temperatures is small, and, moreover, the compression set of the article even after the article is used under severe conditions is unlikely increased. The article of the present disclosure characterized by compression set and hardness preferably contains a polymer. The polymer is preferably the polymer blend described above.
Below, both the article obtained by crosslinking the above-described crosslinkable composition and the article characterized by compression set and hardness will now be described.
The hardness (Shore A, a peak value) of the article is preferably 65 or more, and more preferably 67 or more. The upper limit of the hardness is not limited, and the upper limit may be 90 or less, or may be 80 or less. The hardness of the article can be measured in accordance with JIS K 6253.
Thus, the article of the present disclosure has a suitable hardness. Accordingly, the article of the present disclosure, in the case of being used as, for example, a sealing material, unlikely breaks even when firmly clamped, and unlikely cracks even when used at high temperatures. An excessively low hardness of the article makes it difficult to firmly clamp the article or likely results in cracks when the article is used at high temperatures. An excessively high hardness makes it difficult to compress the article and, thus, excellent sealing properties may be unlikely obtained.
The compression set (300°C) of the article measured after the article is left to stand at 300°C for 70 hours is preferably 50% or less, more preferably 45% or less, even more preferably 40% or less, and yet more preferably 35% or less. The compression set (300°C) can be calculated by leaving the article to stand at 300°C for 70 hours while the article is being compressed at a compressibility of 25%, removing the compression, leaving the article at 23°C for 30 minutes, and measuring the thickness of the article before and after compression.
Thus, the compression set of the article of the present disclosure is small even when the article is used at such high temperatures exceeding 300°C.
The compression set (200°C) of the article measured after the article is left to stand at 200°C for 70 hours and then left to stand at 70°C for 70 hours is preferably less than 50%, more preferably 45% or less, and even more preferably 40% or less. The compression set (200°C) can be calculated by leaving the article to stand at 200°C for 70 hours and further leaving it to stand at 70°C for 270 hours while the article is being compressed at a compressibility of 25%, removing the compression, leaving the article at 20°C for 30 minutes, and measuring the thickness of the article after compression.
Thus, the compression set of the article of the present disclosure even after the article is used under severe conditions is unlikely increased. For example, when the article of the present disclosure is used as a sealing material in a semiconductor manufacturing apparatus, the sealing material may be used in a compressed state at temperatures of 200°C or higher during the operation of the semiconductor manufacturing apparatus. Thereafter, once the operation of the semiconductor manufacturing apparatus is terminated, the sealing material is slowly cooled to room temperature and then left to stand at room temperature while being compressed. Accordingly, the sealing material is required to have a property that enables the sealing material to withstand use under such severe conditions. The article of the present disclosure has excellent high-temperature and low-temperature sealing properties, and can withstand use under such severe conditions.
An example of the method for obtaining the article from the crosslinkable composition may be a method involving molding the crosslinkable composition as a molding material to give a preform and then crosslinking the preform. The

method for obtaining the preform from the crosslinkable composition may be an ordinary method, and the preform can be obtained by a known method such as a method in which the crosslinkable composition is heated and compressed in a metal mold, a method in which the crosslinkable composition is pressed into a heated metal mold, and a method in which the crosslinkable composition is extruded with an extruder. In the case of an extruded product such as a hose or an electric wire, the article can be obtained by carrying out thermal crosslinking with steam or the like after extrusion.

The above crosslinking is referred to as primary crosslinking, and primary crosslinking and then secondary crosslinking are carried out in this order. Primary crosslinking is preferably carried out at 150 to 250°C for 5 to 120 minutes, and more preferably at 170 to 200°C for 5 to 60 minutes. The crosslinking means may be a known crosslinking means, and an example may be press crosslinking.

Secondary crosslinking is preferably carried out at 250 to 320°C for 2 to 48 hours, and more preferably at 280 to 310°C for 5 to 24 hours. Also, secondary crosslinking may be carried out at 180 to 320°C for 2 to 24 hours, or may be carried out at 190 to 310°C for 5 to 20 hours. The temperature may vary within this temperature range. The crosslinking means may be a known crosslinking means, and an example may be oven crosslinking. Crosslinking can be carried out, for example, in air or in a nitrogen atmosphere.

The article of the present disclosure can be suitably used as a sealing material especially in semiconductor manufacturing apparatuses that require heat resistance, and, in particular, semiconductor manufacturing apparatuses in which high density plasma irradiation is carried out. Examples of the sealing material include O-rings, square-rings, gaskets, packings, oil seals, bearing seals, and lip seals.

In addition, the article can also be used as various polymer products used in semiconductor manufacturing apparatus, such as diaphragms, tubes, hoses, various rubber rolls, and belts. The article can also be used as a coating material and a lining material.

Note that the semiconductor manufacturing apparatus as used herein is not limited to an apparatus especially for manufacturing semiconductors, and encompasses a wide variety of manufacturing apparatuses used in the semiconductor field where a high level of cleanliness is required, such as those for manufacturing liquid crystal panels and plasma panels, and examples are as follows.

(1) Etching apparatus

Dry etching apparatus
Plasma etching apparatus
Reactive ion etching apparatus
Reactive ion beam etching apparatus
Sputter etching apparatus
Ion beam etching apparatus
Wet etching apparatus
Ashing apparatus

(2) Cleaning apparatus Dry etching cleaning apparatus

$UV/O_3$ cleaning apparatus
Ion beam cleaning apparatus
Laser beam cleaning apparatus
Plasma cleaning apparatus
Gas etching cleaning apparatus
Extraction cleaning apparatus
Soxhlet extraction cleaning apparatus
High-temperature high-pressure extraction cleaning apparatus
Microwave extraction cleaning apparatus
Supercritical extraction cleaning apparatus

(3) Exposure apparatus

Stepper
Coater/developer

(4) Polishing apparatus
CMP apparatus
(5) Film forming apparatuses

CVD apparatus
Sputtering apparatus

(6) Diffusion/ion implantation apparatus

Oxidation diffusion apparatus
Ion implantation apparatus

The article of the present disclosure delivers excellent performance as a sealing material for, for example, CVD apparatuses, plasma etching apparatuses, reactive ion etching apparatuses, ashing apparatuses, and excimer laser exposure machines.

While embodiments have been described above, it will be understood that various changes in form and detail can be made without departing from the gist and scope of the claims.

<1> According to the first aspect of the present disclosure, provided is

a polymer blend comprising (a) a fluoroelastomer and (b) a crystalline fluoropolymer, wherein
the fluoroelastomer (a) comprises tetrafluoroethylene unit, a fluoroalkyl vinyl ether unit, and a nitrogen-containing crosslinking site,
the crystalline fluoropolymer (b) comprises tetrafluoroethylene unit and a nitrogen-containing crosslinking site,
the polymer blend has a melting point of 310 to 320°C, and
a content of the crystalline fluoropolymer (b) in the polymer blend is 4.0 to 15.0% by mass based on a total mass of the fluoroelastomer (a) and the crystalline fluoropolymer (b).

<2> According to the second aspect of the present disclosure, provided is
the polymer blend according to the first aspect, having a Mooney viscosity at 170°C of 70 to 120.
<3> According to the third aspect of the present disclosure, provided is
the polymer blend according to the first or second aspect, wherein a content of the nitrogen-containing crosslinking site in the polymer blend is 0.5 to 3.0 mol% based on all monomer units constituting the fluoroelastomer (a) and the crystalline fluoropolymer (b) being 100 mol%.
<4> According to the fourth aspect of the present disclosure, provided is
the polymer blend according to any one of the first to third aspects, wherein a content ratio of tetrafluoroethylene unit to the fluoroalkyl vinyl ether unit in the polymer blend is 50/50 to 70/30 in terms of molar ratio (tetrafluoroethylene unit/fluoroalkyl vinyl ether unit).
<5> According to the fifth aspect of the present disclosure, provided is
the polymer blend according to any one of the first to fourth aspects, wherein the fluoroalkyl vinyl ether unit in the fluoroelastomer (a) is perfluoro(methyl vinyl ether) unit.
<6> According to the sixth aspect of the present disclosure, provided is
the polymer blend according to any one of the first to fifth aspects, wherein the fluoroelastomer (a) and the crystalline fluoropolymer (b) comprise a monomer unit having a nitrogen-containing crosslinkable group.
<7> According to the seventh aspect of the present disclosure, provided is
the polymer blend according to any one of the first to sixth aspects, which is obtained by a production method comprising preparing an aqueous dispersion comprising the fluoroelastomer (a) and the crystalline fluoropolymer (b), and coagulating the fluoroelastomer (a) and the crystalline fluoropolymer (b) in the aqueous dispersion.
<8> According to the eighth aspect of the present disclosure, provided is
the polymer blend according to any one of the first to seventh aspects, which is obtained by a production method comprising:

(1-1) polymerizing tetrafluoroethylene, a fluoroalkyl vinyl ether, and a monomer having a nitrogen-containing crosslinkable group in the presence of an aqueous medium to prepare an aqueous dispersion comprising the fluoroelastomer (a),
(1-2) polymerizing tetrafluoroethylene and a monomer having a nitrogen-containing crosslinkable group in the presence of an aqueous medium to prepare an aqueous dispersion comprising the crystalline fluoropolymer (b),
(1-3) mixing the aqueous dispersion comprising the fluoroelastomer (a) with the aqueous dispersion comprising the crystalline fluoropolymer (b) to prepare an aqueous dispersion comprising the fluoroelastomer (a) and the crystalline fluoropolymer (b), and
(1-4) coagulating the fluoroelastomer (a) and the crystalline fluoropolymer (b) in the aqueous dispersion to give the polymer blend.

<9> According to the ninth aspect of the present disclosure, provided is
the polymer blend according to any one of the first to eighth aspects, wherein a content of the nitrogen-containing crosslinking site in the fluoroelastomer (a) is 0.5 to 3.0 mol% based on all monomer units constituting the fluoroelastomer (a) being 100 mol%.
<10> According to the tenth aspect of the present disclosure, provided is
the polymer blend according to the first to ninth aspect, wherein a content of the nitrogen-containing crosslinking site in the crystalline fluoropolymer (b) is 0.5 to 3.0 mol% based on all monomer units constituting the crystalline fluoropolymer (b) being 100 mol%.
<11> According to the eleventh aspect of the present disclosure, provided is
the polymer blend according to any one of the first to seventh aspects, which is obtained by a production method comprising:

(2-1) polymerizing tetrafluoroethylene and a monomer having a nitrogen-containing crosslinkable group in the presence of an aqueous medium to prepare an aqueous dispersion comprising the crystalline fluoropolymer (b), and then
(2-2) polymerizing tetrafluoroethylene, a fluoroalkyl vinyl ether, and a monomer having a nitrogen-containing crosslinkable group in the presence of the crystalline fluoropolymer (b) and an aqueous medium to prepare an aqueous dispersion comprising the fluoroelastomer (a) and the crystalline fluoropolymer (b), and
(2-3) coagulating the fluoroelastomer (a) and the crystalline fluoropolymer (b) in the aqueous dispersion.

<12> According to the twelfth aspect of the present disclosure, provided is
a crosslinkable composition comprising the polymer blend according to any one of the first to eleventh aspects and at least one selected from the group consisting of an inorganic nitride, an organotin compound, an ammonia-generating compound, and a cross-linking agent.
<13> According to the thirteenth aspect of the present disclosure, provided is
an article obtained by crosslinking the crosslinkable composition according to the twelfth aspect.
<14> According to the fourteenth aspect of the present disclosure, provided is
an article according to the thirteenth aspect, the article having:

a compression set measured after being left to stand at 300°C for 70 hours of 50% or less,
a compression set measured after being left to stand at 200°C for 70 hours and then left to stand at 70°C for 70 hours of less than 50%, and
a hardness measured in accordance with ASTM D2240 of 65 or more.

<15> According to the fifteenth aspect of the present disclosure, provided is
a method for producing the polymer blend according to any one of the first to tenth aspects, the method comprising:

(1-1) polymerizing tetrafluoroethylene, a fluoroalkyl vinyl ether, and a monomer having a nitrogen-containing crosslinkable group in the presence of an aqueous medium to prepare an aqueous dispersion comprising the fluoroelastomer (a),
(1-2) polymerizing tetrafluoroethylene and a monomer having a nitrogen-containing crosslinkable group in the presence of an aqueous medium to prepare an aqueous dispersion comprising the crystalline fluoropolymer (b),
(1-3) mixing the aqueous dispersion comprising the fluoroelastomer (a) with the aqueous dispersion comprising the crystalline fluoropolymer (b) to prepare an aqueous dispersion comprising the fluoroelastomer (a) and the crystalline fluoropolymer (b), and
(1-4) coagulating the fluoroelastomer (a) and the crystalline fluoropolymer (b) in the aqueous dispersion to give the polymer blend.

<16> According to the sixteenth aspect of the present disclosure, provided is
a method for producing the polymer blend according to any one of the first to seventh and eleventh aspects, the method comprising:

(2-1) polymerizing tetrafluoroethylene and a monomer having a nitrogen-containing crosslinkable group in the presence of an aqueous medium to prepare an aqueous dispersion comprising the crystalline fluoropolymer (b), and then
(2-2) polymerizing tetrafluoroethylene, a fluoroalkyl vinyl ether, and a monomer having a nitrogen-containing crosslinkable group in the presence of the crystalline fluoropolymer (b) and an aqueous medium to prepare an aqueous dispersion comprising the fluoroelastomer (a) and the crystalline fluoropolymer (b), and

(2-3) coagulating the fluoroelastomer (a) and the crystalline fluoropolymer (b) in the aqueous dispersion to give the polymer blend.

<17> According to the seventeenth aspect of the present disclosure, provided is

the production method according to the sixteenth aspect, wherein
(2-1) the aqueous dispersion comprising the crystalline fluoropolymer (b) is prepared in a reaction vessel, and then
(2-2) while continuing the polymerization reaction in the reaction vessel, the fluoroalkyl vinyl ether is introduced into the reaction vessel to polymerize tetrafluoroethylene, the fluoroalkyl vinyl ether, and a monomer having a nitrogen-containing crosslinkable group.

<18> According to the eighteenth aspect of the present disclosure, provided is
an article having:

a compression set measured after being left to stand at 300°C for 70 hours of 50% or less,
a compression set measured after being left to stand at 200°C for 70 hours and then left to stand at 70°C for 70 hours of less than 50%, and
a hardness measured in accordance with ASTM D2240 of 65 or more.

EXAMPLES

Next, embodiments of the present disclosure will now be described by way of Examples, but the present disclosure is not limited only to these Examples.

Various numerical values in the Examples were measured by the following methods.

(Mooney viscosity)

The Mooney viscosities of the polymer blend and the fluoroelastomer were measured at 170°C in accordance with JIS K 6300 using a Mooney viscometer MV 2000E manufactured by ALPHA TECHNOLOGIES.

(Monomeric composition)

The monomeric compositions of the polymer blend, the fluoroelastomer, and the crystalline fluoropolymer were determined by $^{19}$F-NMR analysis. However, the content of the cyano group-containing monomer unit was determined by the following method (IR).

(Content of cyano group and content of cyano group-containing monomer unit)

The cyano group content and the content of the cyano group-containing monomer unit in the polymer blend, the fluoroelastomer, and the crystalline fluoropolymer were measured by infrared spectroscopy (IR).

(Glass transition temperature)

The glass transition temperature of the polymer blend was determined as follows: Using a differential scanning calorimeter (X-DSC7000, manufactured by Hitachi High-Tech Science Corporation), a DSC curve was obtained by heating 3 mg of a sample at 20°C/min, and the temperature was read at the intermediate point of two intersections between each of the extension lines of the baselines before and after the secondary transition of the DSC curve and the tangent line at the inflection point of the DSC curve.

(Content of crystalline fluoropolymer (b))

Approximately 10 mg of the polymer blend having no history of being heated to a temperature of 300°C or higher was precisely weighed and placed in a dedicated aluminum pan, and the content of the crystalline fluoropolymer (b) in the polymer blend was measured with TG/DTA (a simultaneous thermogravimetric - differential thermal analyzer). The aluminum pan was heated in the temperature range from 25°C to 600°C at 10°C/min in air to give a TG curve, and the rate of weight reduction was calculated from the resulting TG curve to determine the content of the crystalline fluoropolymer (b) in the polymer blend.

Table 1 shows the content of the crystalline fluoropolymer (b) in the polymer blend based on the total mass of the fluoroelastomer (a) and the crystalline fluoropolymer (b) .

(Melting point)

Approximately 10 mg of the polymer blend having no history of being heated to a temperature of 300°C or higher was precisely weighed and placed in a dedicated aluminum pan, and the melting point of the polymer blend was measured with TG/DTA (a simultaneous thermogravimetric - differential thermal analyzer). The aluminum pan was heated in the temperature range from 25°C to 600°C at 10°C/min in air to give a DTA curve, and a temperature corresponding to the peak in the resulting DTA curve was determined as the melting point of the polymer blend. The presence or absence of the melting point of the fluoroelastomer was also verified using the method for measuring the melting point of the polymer blend. In Table 1, "N.D" indicates that no clear peak was observed in the DTA curve.

(Hardness (Shore A) Peak)

The hardness (Shore A) was measured in accordance with JIS K 6253 using an article having a thickness of 2 mm (a peak value).

(Compression set (300°C))

The compression set was measured in accordance with the method described in ASTM D395 or JIS K 6262. Each O-ring produced in the Examples and Comparative Examples was compressed to a compressibility of 25% at normal temperature using a compression apparatus (an O-ring having a thickness (a cross-sectional diameter) of 3.5 mm was compressed to a thickness of 2.625 mm).

Next, the compression apparatus to which the compressed O-ring was fixed was left to stand still in an electric furnace, left to stand at 300°C for 70 hours, and then the compression apparatus was removed from the electric furnace. The O-ring was removed from the compression apparatus, the removed O-ring was left to stand still in a thermostatic chamber at 23°C for 30 minutes, and the thickness of the O-ring ($t_2$) was measured. The compression set was determined by the following expression. Note that an article having a compression set closer to 0% has a better compression set property.

$$\text{Compression set (\%)} = (t_0 - t_2)/(t_0 - t_1) \times 100$$

$t_0$: Original thickness of O-ring (mm)
$t_1$: Thickness of spacer (mm)
$t_2$: Thickness of O-ring after compression test (mm)

In the above test, $t_0$ was 3.5 mm, and $t_1$ was 2.625 mm.

Compression set (200°C→70°C)

The compression set was measured in accordance with the method described in ASTM D395 or JIS K 6262. Each O-ring produced in the Examples and Comparative Examples was compressed to a compressibility of 25% at normal temperature using a compression apparatus (an O-ring having a thickness (a cross-sectional diameter) of 3.5 mm was compressed to a thickness of 2.625 mm).

Next, the compression apparatus to which the compressed O-ring was fixed was left to stand still in an electric furnace, left to stand at 200°C for 70 hours, and then the compression apparatus was removed from the electric furnace. Thereafter, the compression apparatus to which the compressed O-ring was fixed was left to stand still in another electric furnace and left to stand at 70°C for 70 hours. The O-ring was removed from the compression apparatus, the removed O-ring was left to stand still in a thermostatic chamber at 23°C for 30 minutes, and the thickness of the O-ring ($t_2$) was measured. The compression set was determined by the following expression:

$$\text{Compression set (\%)} = (t_0 - t_2)/(t_0 - t_1) \times 100$$

$t_0$: Original thickness of O-ring (mm)
$t_1$: Thickness of spacer (mm)
$t_2$: Thickness of O-ring after compression test (mm)

In the above test, $t_0$ was 3.5 mm, and $t_1$ was 2.625 mm.

Example 1

First, 43 g of ammonium perfluorohexanoate and 0.08 g of ammonium carbonate were added to an SUS autoclave having an internal volume of 2 L, and then 790 g of deionized, degassed water was added. The reaction vessel was hermetically sealed, and the system was nitrogen-purged to remove oxygen. The temperature of the reaction vessel was raised to 54.5°C, 0.33 g of $CF_2=CFOCF_2CF(CF_3)OCF_2CF_2CN$ (CNVE) was fed, then TFE was fed to a pressure of 0.29 MPa, and the pressure and the chamber temperature were maintained. Then, 3.0 g of ammonium persulfate (APS) as a polymerization initiator was fed. TFE was fed such that the reaction pressure was kept constant at 0.29 MPa, and total 0.27 g of CNVE was continuously fed until 25.0 g of TFE was added. Eventually, after the feeding of TFE was complete, the chamber pressure was reduced to 0.19 MPa, and then 40.4 g of PMVE was fed. After PMVE was fed, the pressure was reduced to 0.735 MPa, then an additional gas of TFE/PMVE=56.0/44.0 mol% was introduced into the reaction vessel such that the pressure became 0.85 MPa. Thereafter, 185.0 g of the additional gas of TFE/PMVE=56.0/44.0 mol% was continuously introduced such that the pressure was kept constant at 0.85 MPa. At the same time, total 4.7 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 218 g of a polymer blend.

TG/DTA measurement of the resulting polymer blend showed a melting point at 317.7°C, and the content of the crystalline fluoropolymer (b) was found to be 10.6 wt% from the rate of weight reduction. From DSC measurement, the glass transition temperature was -4.6°C. It was also found that TFE/PMVE was 55.2/44.8 mol% from NMR analysis, CNVE was 0.57 mol% from IR analysis. The Mooney viscosity was 72.

Example 2

First, 43 g of ammonium perfluorohexanoate and 0.08 g of ammonium carbonate were added to an SUS autoclave having an internal volume of 2 L, and then 790 g of deionized, degassed water was added. The reaction vessel was hermetically sealed, and the system was nitrogen-purged to remove oxygen. The temperature of the reaction vessel was raised to 54.5°C, 0.16 g of CNVE was fed, then TFE was fed to a pressure of 0.29 MPa, and the pressure and the chamber temperature were maintained. Then, 1.6 g of ammonium persulfate (APS) as a polymerization initiator was fed. TFE was fed such that the reaction pressure was kept constant at 0.29 MPa, and total 0.38 g of CNVE was continuously fed until 20.0 g of TFE was added. Eventually, after the feeding of TFE was complete, the chamber pressure was reduced to 0.19 MPa, and then 40.4 g of PMVE was fed. After PMVE was fed, the pressure was reduced to 0.735 MPa, then an additional gas of TFE/PMVE=54.0/46.0 mol% was introduced into the reaction vessel such that the pressure became 0.85 MPa. Thereafter, 185.0 g of the additional gas of TFE/PMVE=54.0/46.0 mol% was continuously introduced such that the pressure was kept constant at 0.85 MPa. At the same time, total 4.7 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 213 g of a polymer blend.

TG/DTA measurement of the resulting polymer blend showed a melting point at 316.5°C, and the content of the crystalline fluoropolymer (b) was found to be 9.4 wt% from the rate of weight reduction. From DSC measurement, the glass transition temperature was -5.0°C. It was also found that TFE/PMVE was 53.5/46.5 mol% from NMR analysis, CNVE was 0.56 mol% from IR analysis. The Mooney viscosity was 86.

Example 3

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 54.5°C, 0.65 g of CNVE was fed, then TFE was fed to a pressure of 0.29 MPa, and the pressure and the chamber temperature were maintained. Then, 8.5 g of ammonium persulfate (APS) as a polymerization initiator was fed. TFE was fed such that the reaction pressure was kept constant at 0.29 MPa, and total 0.65 g of CNVE was continuously fed until 34.0 g of TFE was added. Eventually, after the feeding of TFE was complete, the chamber pressure was reduced to 0.19 MPa, and then 145 g of PMVE was fed. After PMVE was fed, the pressure was reduced to 0.735 MPa, then an additional gas of TFE/PMVE=58.0/42.0 mol% was introduced into the reaction vessel such that the pressure became 0.85 MPa. Thereafter, 660 g of the additional gas of TFE/PMVE=58.0/42.0 mol% was continuously introduced such that the

pressure was kept constant at 0.85 MPa. At the same time, total 14.3 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 718 g of a polymer blend.

TG/DTA measurement of the resulting polymer blend showed a melting point at 313.7°C, and the content of the crystalline fluoropolymer (b) was found to be 5.5 wt% from the rate of weight reduction. From DSC measurement, the glass transition temperature was -5.3°C. It was also found that TFE/PMVE was 58.6/41.4 mol% from NMR analysis, CNVE was 0.55 mol% from IR analysis. The Mooney viscosity was 90.

Example 4

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 54.5°C, 0.54 g of CNVE was fed, then TFE was fed to a pressure of 0.29 MPa, and the pressure and the chamber temperature were maintained. Then, 5.4 g of ammonium persulfate (APS) as a polymerization initiator was fed. TFE was fed such that the reaction pressure was kept constant at 0.29 MPa, and total 0.65 g of CNVE was continuously fed until 34.0 g of TFE was added. Eventually, after the feeding of TFE was complete, the chamber pressure was reduced to 0.19 MPa, and then 145 g of PMVE was fed. After PMVE was fed, the pressure was reduced to 0.735 MPa, then an additional gas of TFE/PMVE=58.0/42.0 mol% was introduced into the reaction vessel such that the pressure became 0.85 MPa. Thereafter, 660 g of the additional gas of TFE/PMVE=58.0/42.0 mol% was continuously introduced such that the pressure was kept constant at 0.85 MPa. At the same time, total 14.3 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 700 g of a polymer blend.

TG/DTA measurement of the resulting polymer blend showed a melting point at 314.3°C, and the content of the crystalline fluoropolymer (b) was found to be 5.0 wt% from the rate of weight reduction. From DSC measurement, the glass transition temperature was -5.3°C. It was also found that TFE/PMVE was 58.9/41.1 mol% from NMR analysis, CNVE was 0.57 mol% from IR analysis. The Mooney viscosity was 115.

Example 5

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 54.5°C, 0.54 g of CNVE was fed, then TFE was fed to a pressure of 0.29 MPa, and the pressure and the chamber temperature were maintained. Then, 9.2 g of ammonium persulfate (APS) as a polymerization initiator was fed. TFE was fed such that the reaction pressure was kept constant at 0.29 MPa, and total 0.97 g of CNVE was continuously fed until 51.0 g of TFE was added. Eventually, after the feeding of TFE was complete, the chamber pressure was reduced to 0.19 MPa, and then 145 g of PMVE was fed. After PMVE was fed, the pressure was reduced to 0.735 MPa, then an additional gas of TFE/PMVE=58.0/42.0 mol% was introduced into the reaction vessel such that the pressure became 0.85 MPa. Thereafter, 660 g of the additional gas of TFE/PMVE=58.0/42.0 mol% was continuously introduced such that the pressure was kept constant at 0.85 MPa. At the same time, total 14.3 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 730 g of a polymer blend.

TG/DTA measurement of the resulting polymer blend showed a melting point at 314.4°C, and the content of the crystalline fluoropolymer (b) was found to be 7.6 wt% from the rate of weight reduction. From DSC measurement, the glass transition temperature was -5.5°C. It was also found that TFE/PMVE was 58.1/41.9 mol% from NMR analysis, CNVE was 0.53 mol% from IR analysis. The Mooney viscosity was 87.

Example 6

First, 145 g of ammonium perfluorohexanoate and 0.26 g of ammonium carbonate were added to an SUS autoclave having an internal volume of 6 L, and then 2,660 g of deionized, degassed water was added. The reaction vessel

was hermetically sealed, and the system was nitrogen-purged to remove oxygen. The temperature of the reaction vessel was raised to 54.5°C, 0.54 g of CNVE was fed, then TFE was fed to a pressure of 0.29 MPa, and the pressure and the chamber temperature were maintained. Then, 7.2 g of ammonium persulfate (APS) as a polymerization initiator was fed. TFE was fed such that the reaction pressure was kept constant at 0.29 MPa, and total 0.97 g of CNVE was continuously fed until 51.0 g of TFE was added. Eventually, after the feeding of TFE was complete, the chamber pressure was reduced to 0.19 MPa, and then 124 g of PMVE was fed. After PMVE was fed, the pressure was reduced to 0.735 MPa, then an additional gas of TFE/PMVE=62.5/37.5 mol% was introduced into the reaction vessel such that the pressure became 0.85 MPa. Thereafter, 720 g of the additional gas of TFE/PMVE=62.5/37.5 mol% was continuously introduced such that the pressure was kept constant at 0.85 MPa. At the same time, total 14.3 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 700 g of a polymer blend.

TG/DTA measurement of the resulting polymer blend showed a melting point at 312.9°C, and the content of the crystalline fluoropolymer (b) was found to be 5.9 wt% from the rate of weight reduction. From DSC measurement, the glass transition temperature was -4.1°C. It was also found that TFE/PMVE was 63.5/36.5 mol% from NMR analysis, CNVE was 0.55 mol% from IR analysis. The Mooney viscosity was 111.

Example 7

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 67.5°C, 0.54 g of CNVE was fed, then TFE was fed to a pressure of 0.36 MPa, and the pressure and the chamber temperature were maintained. Then, 1.1 g of ammonium persulfate (APS) as a polymerization initiator was fed. TFE was fed such that the reaction pressure was kept constant at 0.36 MPa, and total 0.45 g of CNVE was continuously fed until 42.0 g of TFE was added. Eventually, after the feeding of TFE was complete, the chamber pressure was reduced to 0.26 MPa, and then 115 g of PMVE was fed. After PMVE was fed, the pressure was reduced to 0.735 MPa, then an additional gas of TFE/PMVE=64.5/35.5 mol% was introduced into the reaction vessel such that the pressure became 0.85 MPa. Thereafter, 724 g of the additional gas of TFE/PMVE=64.5/35.5 mol% was continuously introduced such that the pressure was kept constant at 0.85 MPa. At the same time, total 17.4 g of CNVE was continuously fed. When the polymerization rate started to decrease, a 2% by mass aqueous solution of APS was suitably added. The total amount of the 2% by weight aqueous solution of APS added after the beginning of polymerization was 20 mL. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 730 g of a polymer blend.

TG/DTA measurement of the resulting polymer blend showed a melting point at 317.5°C, and the content of the crystalline fluoropolymer (b) was found to be 5.2 wt% from the rate of weight reduction. From DSC measurement, the glass transition temperature was -2.6°C. It was also found that TFE/PMVE was 66.2/33.8 mol% from NMR analysis, CNVE was 0.61 mol% from IR analysis. The Mooney viscosity was 111.

Example 8

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 67.5°C, 0.54 g of CNVE was fed, then TFE was fed to a pressure of 0.36 MPa, and the pressure and the chamber temperature were maintained. Then, 1.1 g of ammonium persulfate (APS) as a polymerization initiator was fed. TFE was fed such that the reaction pressure was kept constant at 0.36 MPa, and total 0.97 g of CNVE was continuously fed until 51.0 g of TFE was added. Eventually, after the feeding of TFE was complete, the chamber pressure was reduced to 0.26 MPa, and then 115 g of PMVE was fed. After PMVE was fed, the pressure was reduced to 0.735 MPa, then an additional gas of TFE/PMVE=64.5/35.5 mol% was introduced into the reaction vessel such that the pressure became 0.85 MPa. Thereafter, 724 g of the additional gas of TFE/PMVE=64.5/35.5 mol% was continuously introduced such that the pressure was kept constant at 0.85 MPa. At the same time, total 17.4 g of CNVE was continuously fed. When the polymerization rate started to decrease, a 2% by mass aqueous solution of APS was suitably added. The total amount of the 2% by weight aqueous solution of APS added after the beginning of polymerization was 20 mL. When all the additional gas and CNVE were fed, the stirring was terminated, the pressure of the reaction vessel was reduced to atmospheric

pressure, and the aqueous dispersion was removed from the reaction vessel and cooled. The resulting aqueous dispersion was coagulated with an aqueous solution of nitric acid, washed with water, and dried in vacuo at 70°C for 24 hours to give 742 g of a polymer blend.

TG/DTA measurement of the resulting polymer blend showed a melting point at 316.2°C, and the content of the crystalline fluoropolymer (b) was found to be 7.2 wt% from the rate of weight reduction. From DSC measurement, the glass transition temperature was -2.8°C. It was also found that TFE/PMVE was 66.6/33.4 mol% from NMR analysis, CNVE was 0.59 mol% from IR analysis. The Mooney viscosity was 108.

Comparative Example 1

First, 43 g of ammonium perfluorohexanoate and 0.08 g of ammonium carbonate were added to an SUS autoclave having an internal volume of 2 L, and then 790 g of deionized, degassed water was added. The reaction vessel was hermetically sealed, and the system was nitrogen-purged to remove oxygen. The temperature of the reaction vessel was raised to 54.5°C, 0.16 g of CNVE was fed, then TFE was fed to a pressure of 0.29 MPa, and the pressure and the chamber temperature were maintained. Then, 1.6 g of ammonium persulfate (APS) as a polymerization initiator was fed. TFE was fed such that the reaction pressure was kept constant at 0.29 MPa, and total 0.19 g of CNVE was continuously fed until 10.0 g of TFE was added. Eventually, after the feeding of TFE was complete, the chamber pressure was reduced to 0.19 MPa, and then 40.4 g of PMVE was fed. After PMVE was fed, the pressure was reduced to 0.735 MPa, then an additional gas of TFE/PMVE=54.0/46.0 mol% was introduced into the reaction vessel such that the pressure became 0.85 MPa. Thereafter, 198 g of the additional gas of TFE/PMVE=54.0/46.0 mol% was continuously introduced such that the pressure was kept constant at 0.85 MPa. At the same time, total 5.0 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 213 g of a polymer blend.

When the resulting polymer blend was subjected to TG/DTA measurement, no melting point was observed, and the content of the crystalline fluoropolymer (b) was found to be 3.6 wt% from the rate of weight reduction. From DSC measurement, the glass transition temperature was -5.4°C. It was also found that TFE/PMVE was 54.4/45.6 mol% from NMR analysis, CNVE was 0.56 mol% from IR analysis. The Mooney viscosity was 96.

Comparative Example 2

First, 155 g of ammonium perfluorohexanoate and 0.28 g of ammonium carbonate were added to an SUS autoclave having an internal volume of 6 L, and then 2,880 g of deionized, degassed water was added. The reaction vessel was hermetically sealed, and the system was nitrogen-purged to remove oxygen. The temperature of the reaction vessel was raised to 54.5°C, 2.24 g of CNVE was fed, then a mixed gas of TFE/PMVE=24.0/76.0 mol% was fed to a pressure of 0.85 MPa, and the pressure and the chamber temperature were maintained. Then, 15.0 g of ammonium persulfate (APS) as a polymerization initiator was fed. Then, 810 g of the additional gas of TFE/PMVE=58.0/42.0 mol% was continuously introduced such that the reaction pressure was kept constant at 0.85 MPa. At the same time, total 25.6 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 828 g of a polymer blend.

When the resulting polymer blend was subjected to TG/DTA measurement, no melting point was observed, and the content of the crystalline fluoropolymer (b) was found to be 0 wt% from the rate of weight reduction. From DSC measurement, the glass transition temperature was -5.2°C. It was also found that TFE/PMVE was 58.0/42.0 mol% from NMR analysis, CNVE was 1.20 mol% from IR analysis. The Mooney viscosity was 80.

Comparative Example 3

First, 43 g of ammonium perfluorohexanoate and 0.08 g of ammonium carbonate were added to an SUS autoclave having an internal volume of 2 L, and then 790 g of deionized, degassed water was added. The reaction vessel was hermetically sealed, and the system was nitrogen-purged to remove oxygen. The temperature of the reaction vessel was raised to 54.5°C, 0.64 g of CNVE was fed, then TFE was fed to a pressure of 0.29 MPa, and the pressure and the chamber temperature were maintained. Then, 2.2 g of ammonium persulfate (APS) as a polymerization initiator was fed. TFE was fed such that the reaction pressure was kept constant at 0.29 MPa, and total 0.49 g of CNVE was continuously fed until 17.0 g of TFE was added. Eventually, after the feeding of TFE was complete, the chamber pressure was reduced to 0.19 MPa, and then 40.4 g of PMVE was fed. After PMVE was fed, the pressure was reduced to 0.735 MPa, then an

additional gas of TFE/PMVE=58.0/42.0 mol% was introduced into the reaction vessel such that the pressure became 0.85 MPa. Thereafter, 198 g of the additional gas of TFE/PMVE=58.0/42.0 mol% was continuously introduced such that the pressure was kept constant at 0.85 MPa. At the same time, total 4.7 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 217 g of a polymer blend.

TG/DTA measurement of the resulting polymer blend showed a melting point at 304.0°C, and the content of the crystalline fluoropolymer (b) was found to be 8.0 wt% from the rate of weight reduction. From DSC measurement, the glass transition temperature was -5.0°C. It was also found that TFE/PMVE was 58.0/42.0 mol% from NMR analysis, CNVE was 0.58 mol% from IR analysis. The Mooney viscosity was 92.

Comparative Example 4

First, 43 g of ammonium perfluorohexanoate and 0.08 g of ammonium carbonate were added to an SUS autoclave having an internal volume of 2 L, and then 790 g of deionized, degassed water was added. The reaction vessel was hermetically sealed, and the system was nitrogen-purged to remove oxygen. The temperature of the reaction vessel was raised to 54.5°C, 0.16 g of CNVE was fed, then TFE was fed to a pressure of 0.29 MPa, and the pressure and the chamber temperature were maintained. Then, 1.8 g of ammonium persulfate (APS) as a polymerization initiator was fed. TFE was fed such that the reaction pressure was kept constant at 0.29 MPa, and total 0.08 g of CNVE was continuously fed until 22.0 g of TFE was added. Eventually, after the feeding of TFE was complete, the chamber pressure was reduced to 0.19 MPa, and then 40.4 g of PMVE was fed. After PMVE was fed, the pressure was reduced to 0.735 MPa, then an additional gas of TFE/PMVE=58.0/42.0 mol% was introduced into the reaction vessel such that the pressure became 0.85 MPa. Thereafter, 188.0 g of the additional gas of TFE/PMVE=58.0/42.0 mol% was continuously introduced such that the pressure was kept constant at 0.85 MPa. At the same time, total 4.8 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was coagulated with an aqueous solution of nitric acid, washed with water, and dried in vacuo at 70°C for 24 hours to give 213 g of a polymer blend.

TG/DTA measurement of the resulting polymer blend showed a melting point at 328.0°C, and the content of the crystalline fluoropolymer (b) was found to be 10.0 wt% from the rate of weight reduction. From DSC measurement, the glass transition temperature was -5.0°C. It was also found that TFE/PMVE was 58.0/42.0 mol% from NMR analysis, CNVE was 0.58 mol% from IR analysis. The Mooney viscosity was 86.

Synthesis Example of fluoroelastomer (a)

First, 155 g of ammonium perfluorohexanoate and 0.28 g of ammonium carbonate were added to an SUS autoclave having an internal volume of 6 L, and then 2,880 g of deionized, degassed water was added. The reaction vessel was hermetically sealed, and the system was nitrogen-purged to remove oxygen. The temperature of the reaction vessel was raised to 54.5°C, 1.21 g of CNVE was fed, then a mixed gas of TFE/PMVE=24.0/76.0 mol% was fed to a pressure of 0.85 MPa, and the pressure and the chamber temperature were maintained. Then, 15.0 g of ammonium persulfate (APS) as a polymerization initiator was fed. Then, 810 g of the additional gas of TFE/PMVE=58.0/42.0 mol% was continuously introduced such that the reaction pressure was kept constant at 0.85 MPa. At the same time, total 19.8 g of CNVE was continuously fed. When all the additional gas and CNVE were fed, the stirring was terminated, the pressure of the reaction vessel was reduced to atmospheric pressure, and the aqueous dispersion was removed from the reaction vessel and cooled. The resulting aqueous dispersion was partially coagulated with an aqueous solution of nitric acid, washed with water, and dried in vacuo at 70°C for 24 hours.

When the resulting fluoroelastomer (a) was subjected to TG/DTA measurement, no melting point was observed, and the content of the crystalline fluoropolymer (b) was found to be 0 wt% from the rate of weight reduction. It was also found that TFE/PMVE was 58.0/42.0 mol% from NMR analysis, CNVE was 0.60 mol% from IR analysis. The Mooney viscosity was 74.

Synthesis Example of crystalline fluoropolymer (b1)

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 54.5°C, 0.54 g of CNVE was fed, then TFE was fed to a pressure of 0.29 MPa, and the pressure and the

chamber temperature were maintained. Then, 5.4 g of ammonium persulfate (APS) as a polymerization initiator was fed. TFE was fed such that the reaction pressure was kept constant at 0.29 MPa, and total 0.65 g of CNVE was continuously fed until 34.0 g of TFE was added. Eventually, after the feeding of TFE was complete, the chamber pressure was reduced to 0.19 MPa, then the stirring was terminated, the pressure of the reaction vessel was reduced to atmospheric pressure, and the aqueous dispersion was removed from the reaction vessel and cooled. The resulting aqueous dispersion was partially coagulated with an aqueous solution of nitric acid, washed with water, and dried in vacuo at 70°C for 24 hours.

CNVE was found to be 0.90 mol% from IR analysis of the resulting crystalline fluoropolymer (b1).

Synthesis Example of crystalline fluoropolymer (b2)

First, 145 g of ammonium perfluorohexanoate and 0.26 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 54.5°C, 0.1 g of CNVE was fed, then TFE was fed to a pressure of 0.29 MPa, and the pressure and the chamber temperature were maintained. Then, 5.4 g of ammonium persulfate (APS) as a polymerization initiator was fed. TFE was fed such that the reaction pressure was kept constant at 0.29 MPa, and total 0.04 g of CNVE was continuously fed until 34.0 g of TFE was added. Eventually, after the feeding of TFE was complete, the chamber pressure was reduced to 0.19 MPa, then the stirring was terminated, the pressure of the reaction vessel was reduced to atmospheric pressure, and the aqueous dispersion was removed from the reaction vessel and cooled. The resulting aqueous dispersion was partially coagulated with an aqueous solution of nitric acid, washed with water, and dried in vacuo at 70°C for 24 hours.

CNVE was found to be 0.10 mol% from IR analysis of the resulting crystalline fluoropolymer (b1).

Synthesis Example of crystalline fluoropolymer (b3)

First, 145 g of ammonium perfluorohexanoate and 2.16 g of ammonium carbonate were added to an SUS autoclave having an internal volume of 6 L, and then 2,660 g of deionized, degassed water was added. The reaction vessel was hermetically sealed, and the system was nitrogen-purged to remove oxygen. The temperature of the reaction vessel was raised to 54.5°C, 0.54 g of CNVE was fed, then TFE was fed to a pressure of 0.29 MPa, and the pressure and the chamber temperature were maintained. Then, 5.4 g of ammonium persulfate (APS) as a polymerization initiator was fed. TFE was fed such that the reaction pressure was kept constant at 0.29 MPa, and total 1.71 g of CNVE was continuously fed until 34.0 g of TFE was added. Eventually, after the feeding of TFE was complete, the chamber pressure was reduced to 0.19 MPa, then the stirring was terminated, the pressure of the reaction vessel was reduced to atmospheric pressure, and the aqueous dispersion was removed from the reaction vessel and cooled. The resulting aqueous dispersion was partially coagulated with an aqueous solution of nitric acid, washed with water, and dried in vacuo at 70°C for 24 hours.

CNVE was found to be 3.20 mol% from IR analysis of the resulting crystalline fluoropolymer (b1).

Example 9

Initially, 995 g of an aqueous dispersion of the fluoroelastomer (a) and 846 g of an aqueous dispersion of the fluoropolymer (b1) were introduced into a vessel equipped with a stirrer to prepare a mixed aqueous dispersion. The resulting mixed aqueous dispersion was coagulated with an aqueous solution of nitric acid, washed with water, and dried in vacuo at 70°C for 24 hours to give 220 g of a polymer blend. TG/DTA measurement of the resulting polymer blend showed a melting point at 318°C, and the content of the crystalline fluoropolymer (b) was found to be 4.7 wt% from the rate of weight reduction. From DSC measurement, the glass transition temperature was -5.0°C. The Mooney viscosity was 86.

Example 10

Initially, 942 g of an aqueous dispersion of the fluoroelastomer (a) and 1,692 g of an aqueous dispersion of the fluoropolymer (b1) were introduced into a vessel equipped with a stirrer to prepare a mixed aqueous dispersion. The resulting mixed aqueous dispersion was coagulated with an aqueous solution of nitric acid, washed with water, and dried in vacuo at 70°C for 24 hours to give 220 g of a polymer blend. TG/DTA measurement of the resulting polymer blend showed a melting point at 318°C, and the content of the crystalline fluoropolymer (b) was found to be 11.2 wt% from the rate of weight reduction. From DSC measurement, the glass transition temperature was -5.0°C. The Mooney viscosity was 92.

Comparative Example 5

Initially, 890 g of an aqueous dispersion of the fluoroelastomer (a) and 2,538 g of an aqueous dispersion of the fluoropolymer (b1) were introduced into a vessel equipped with a stirrer to prepare a mixed aqueous dispersion. The

resulting mixed aqueous dispersion was coagulated with an aqueous solution of nitric acid, washed with water, and dried in vacuo at 70°C for 24 hours to give 220 g of a polymer blend. TG/DTA measurement of the resulting polymer blend showed a melting point at 318°C, and the content of the crystalline fluoropolymer (b) was found to be 15.7 wt% from the rate of weight reduction. From DSC measurement, the glass transition temperature was -4.8°C. The Mooney viscosity was 92.

Comparative Example 6

Initially, 953 g of an aqueous dispersion of the fluoroelastomer (a) and 1,523 g of an aqueous dispersion of the fluoropolymer (b2) were introduced into a vessel equipped with a stirrer to prepare a mixed aqueous dispersion. The resulting mixed aqueous dispersion was coagulated with an aqueous solution of nitric acid, washed with water, and dried in vacuo at 70°C for 24 hours to give 220 g of a polymer blend. TG/DTA measurement of the resulting polymer blend showed a melting point at 328°C, and the content of the crystalline fluoropolymer (b) was found to be 10.2 wt% from the rate of weight reduction. From DSC measurement, the glass transition temperature was -4.8°C. The Mooney viscosity was 82.

Comparative Example 7

Initially, 963 g of an aqueous dispersion of the fluoroelastomer (a) and 1,353 g of an aqueous dispersion of the fluoropolymer (b2) were introduced into a vessel equipped with a stirrer to prepare a mixed aqueous dispersion. The resulting mixed aqueous dispersion was coagulated with an aqueous solution of nitric acid, washed with water, and dried in vacuo at 70°C for 24 hours to give 220 g of a polymer blend. TG/DTA measurement of the resulting polymer blend showed a melting point at 299°C, and the content of the crystalline fluoropolymer (b) was found to be 8.2 wt% from the rate of weight reduction. From DSC measurement, the glass transition temperature was -4.9°C. The Mooney viscosity was 87.

Then, 0.9 parts by mass of a crosslinking agent 2,2-bis[3-amino-4-(N-phenylamino)phenyl]hexafluoropropane was added based on 100 parts by mass of the fluoroelastomer (a) in each polymer blend produced in the Examples and Comparative Examples, and the mixture was kneaded with open rolls, pressed at 180°C for 30 minutes for crosslinking, and, moreover, the mixture was oven-crosslinked in an air oven at 290°C for 18 hours to produce a sheet having a thickness of 2 mm and an O-ring having a size of P24. The hardness of the resulting sheet was measured, and the compression set of the resulting O-ring was measured. The results are shown in Tables 1 to 3.

[Table 1]

**Table** 1

| | | Example | | | | | | | | Comparative Example | | | |
|---|---|---|---|---|---|---|---|---|---|---|---|---|---|
| | | 1 | 2 | 3 | 4 | 5 | 6 | 7 | 8 | 1 | 2 | 3 | 4 |
| Polymer blend | | | | | | | | | | | | | |
| Mooney viscosity | | 72 | 86 | 90 | 115 | 87 | 111 | 111 | 108 | 96 | 80 | 92 | 86 |
| Monomeric composition (mol%) | TFE | 54.9 | 53.2 | 58.2 | 58.5 | 57.8 | 63.2 | 65.9 | 66.2 | 54.1 | 57.7 | 57.7 | 57.7 |
| | PMVE | 44.5 | 45.2 | 41.2 | 40.9 | 41.6 | 36.4 | 33.6 | 33.2 | 45.4 | 41.7 | 41.7 | 41.7 |
| | TFE/PMVE (molar ratio) | 55.2/44.8 | 53.5146.5 | 58.6/41.4 | 58.9/41.1 | 58.1/41.9 | 63.5/36.5 | 66.2/33.8 | 66.6/33.4 | 54.4/45.6 | 58.0/42.0 | 58.0/42.0 | 58.0/42.0 |
| Cyano group content (mol%) | | 0.57 | 0.56 | 0.55 | 0.57 | 0.53 | 0.55 | 0.61 | 0.50 | 0.56 | 1.20 | 0.58 | 0.58 |
| Glass transition temperature (°C) | | -4.6 | -5.0 | -5.3 | -5.3 | -5.5 | -4.1 | -2.6 | -2.8 | -5.4 | -5.2 | -5.0 | -5.0 |
| Content of crystalline fluoropolymer (b) (% by mass) | | 10.6 | 9.4 | 5.5 | 5.0 | 7.6 | 5.9 | 5.2 | 7.2 | 3.6 | 0 | 8.0 | 10.0 |
| (Melting point) (°C) | | 317.7 | 316.5 | 313.7 | 314.3 | 314.4 | 312.9 | 317.5 | 316.2 | N.D | N.D | 304.0 | 328.0 |
| Article | | | | | | | | | | | | | |
| Hardness (peak value) | | 75 | 72 | 68 | 67 | 69 | 69 | 71 | 73 | 64 | 62 | 70 | 74 |
| Compression set (300°C) (%) | | 35 | 34 | 24 | 23 | 34 | 21 | 22 | 23 | 22 | 22 | 54 | 26 |
| Compression set (200°C→70° C) (%) | | 40 | 36 | 28 | 32 | 39 | 35 | 34 | 35 | 29 | 22 | 26 | 50 |

[Table 2-1]

| Table 2-1 Composition of fluoroelastomer (a) | | |
|---|---|---|
| Monomeric composition (mol%.) | TFE | 57.7 |
| | PMVE | 41.7 |
| | CNVE | 0.60 |

[Table 2-2]

| Table 2-2 Composition of crystalline fluoropolymer (b) | | | | |
|---|---|---|---|---|
| | | (b1) | (b2) | (b3) |
| Monomeric composition (mol%) | TFE | 99.10 | 99.90 | 96.80 |
| | CNVE | 0.90 | 0.10 | 3.20 |

[Table 3]

Table 3

| | | Example | | Comparative Example | | |
|---|---|---|---|---|---|---|
| | | 9 | 10 | 5 | 6 | 7 |
| Weight fraction (% by mass) | Fluoroelastomer (a) | 95.3 | 88.8 | 84.3 | 89.8 | 91.8 |
| | Crystalline fluoropolymer (b1) | 4.7 | 11.2 | 15.7 | - | - |
| | Crystalline flucropolymaer (b2) | - | - | - | 10.2 | - |
| | Crystalline fluoropolymer (b3) | - | - | - | - | 8.2 |
| Physical property of polymer blend | Mooney viscosity | 86 | 92 | 92 | 82 | 87 |
| | Melting point (°C) | 318 | | | 328 | 299 |
| | Glass transition temperature (°C) | -5.0 | -5.0 | -4.8 | -4.8 | -4.9 |
| | Hardness (peak value) | 69 | 78 | 84 | 73 | 75 |
| | Compression set (300°C) (%) | 28 | 39 | 51 | 35 | 52 |
| | Compression set (20°C→70°C) (%) | 36 | 43 | 47 | 51 | 33 |

## Claims

**1.** A polymer blend comprising (a) a fluoroelastomer and (b) a crystalline fluoropolymer, wherein

the fluoroelastomer (a) comprises tetrafluoroethylene unit, a fluoroalkyl vinyl ether unit, and a nitrogen-containing crosslinking site,
the crystalline fluoropolymer (b) comprises tetrafluoroethylene unit and a nitrogen-containing crosslinking site,
the polymer blend has a melting point of 310 to 320°C, and
a content of the crystalline fluoropolymer (b) in the polymer blend is 4.0 to 15.0% by mass based on a total mass of the fluoroelastomer (a) and the crystalline fluoropolymer (b).

**2.** The polymer blend according to claim 1, having a Mooney viscosity at 170°C of 70 to 120.

**3.** The polymer blend according to claim 1 or 2,
wherein a content of the nitrogen-containing crosslinking site in the polymer blend is 0.5 to 3.0 mol% based on all monomer units constituting the fluoroelastomer (a) and the crystalline fluoropolymer (b) being 100 mol%.

**4.** The polymer blend according to any one of claims 1 to 3, wherein a content ratio of tetrafluoroethylene unit to the fluoroalkyl vinyl ether unit in the polymer blend is 50/50 to 70/30 in terms of molar ratio (tetrafluoroethylene unit/fluoroalkyl vinyl ether unit).

**5.** The polymer blend according to any one of claims 1 to 4, wherein the fluoroalkyl vinyl ether unit in the fluoroelastomer (a) is perfluoro(methyl vinyl ether) unit.

**6.** The polymer blend according to any of claims 1 to 5, wherein the fluoroelastomer (a) and the crystalline fluoropolymer (b) comprise a monomer unit having a nitrogen-containing crosslinkable group.

**7.** The polymer blend according to any one of claims 1 to 6, which is obtained by a production method comprising preparing an aqueous dispersion comprising the fluoroelastomer (a) and the crystalline fluoropolymer (b), and coagulating the fluoroelastomer (a) and the crystalline fluoropolymer (b) in the aqueous dispersion.

**8.** The polymer blend according to any one of claims 1 to 7, which is obtained by a production method comprising:

(1-1) polymerizing tetrafluoroethylene, a fluoroalkyl vinyl ether, and a monomer having a nitrogen-containing crosslinkable group in the presence of an aqueous medium to prepare an aqueous dispersion comprising the fluoroelastomer (a),
(1-2) polymerizing tetrafluoroethylene and a monomer having a nitrogen-containing crosslinkable group in the presence of an aqueous medium to prepare an aqueous dispersion comprising the crystalline fluoropolymer (b),
(1-3) mixing the aqueous dispersion comprising the fluoroelastomer (a) with the aqueous dispersion comprising the crystalline fluoropolymer (b) to prepare an aqueous dispersion comprising the fluoroelastomer (a) and the crystalline fluoropolymer (b), and
(1-4) coagulating the fluoroelastomer (a) and the crystalline fluoropolymer (b) in the aqueous dispersion to give the polymer blend.

**9.** The polymer blend according to any one of claims 1 to **8,** wherein a content of the nitrogen-containing crosslinking site in the fluoroelastomer (a) is 0.5 to 3.0 mol% based on all monomer units constituting the fluoroelastomer (a) being 100 mol%.

**10.** The polymer blend according to any one of claims 1 to **9,** wherein a content of the nitrogen-containing crosslinking site in the crystalline fluoropolymer (b) is 0.5 to 3.0 mol% based on all monomer units constituting the crystalline fluoropolymer (b) being 100 mol%.

**11.** The polymer blend according to any one of claims 1 to **7,** which is obtained by a production method comprising:

(2-1) polymerizing tetrafluoroethylene and a monomer having a nitrogen-containing crosslinkable group in the presence of an aqueous medium to prepare an aqueous dispersion comprising the crystalline fluoropolymer (b), and then
(2-2) polymerizing tetrafluoroethylene, a fluoroalkyl vinyl ether, and a monomer having a nitrogen-containing crosslinkable group in the presence of the crystalline fluoropolymer (b) and an aqueous medium to prepare an aqueous dispersion comprising the fluoroelastomer (a) and the crystalline fluoropolymer (b), and
(2-3) coagulating the fluoroelastomer (a) and the crystalline fluoropolymer (b) in the aqueous dispersion.

**12.** A crosslinkable composition comprising the polymer blend according to any one of claims 1 to 11 and at least one selected from the group consisting of an inorganic nitride, an organotin compound, an ammonia-generating compound, and a cross-linking agent.

**13.** An article obtained by crosslinking the crosslinkable composition according to claim 12.

**14.** An article according to claim 13, the article having:

a compression set measured after being left to stand at 300°C for 70 hours of 50% or less,
a compression set measured after being left to stand at 200°C for 70 hours and then left to stand at 70°C for 70 hours of less than 50%, and
a hardness measured in accordance with ASTM D2240 of 65 or more.

**15.** A method for producing the polymer blend according to any one of claims 1 to 10, the method comprising:

(1-1) polymerizing tetrafluoroethylene, a fluoroalkyl vinyl ether, and a monomer having a nitrogen-containing crosslinkable group in the presence of an aqueous medium to prepare an aqueous dispersion comprising the fluoroelastomer (a),
(1-2) polymerizing tetrafluoroethylene and a monomer having a nitrogen-containing crosslinkable group in the presence of an aqueous medium to prepare an aqueous dispersion comprising the crystalline fluoropolymer (b),
(1-3) mixing the aqueous dispersion comprising the fluoroelastomer (a) with the aqueous dispersion comprising the crystalline fluoropolymer (b) to prepare an aqueous dispersion comprising the fluoroelastomer (a) and the crystalline fluoropolymer (b), and
(1-4) coagulating the fluoroelastomer (a) and the crystalline fluoropolymer (b) in the aqueous dispersion to give the polymer blend.

**16.** A method for producing the polymer blend according to any one of claims 1 to 7 and 11, the method comprising:

(2-1) polymerizing tetrafluoroethylene and a monomer having a nitrogen-containing crosslinkable group in the presence of an aqueous medium to prepare an aqueous dispersion comprising the crystalline fluoropolymer (b), and then
(2-2) polymerizing tetrafluoroethylene, a fluoroalkyl vinyl ether, and a monomer having a nitrogen-containing crosslinkable group in the presence of the crystalline fluoropolymer (b) and an aqueous medium to prepare an aqueous dispersion comprising the fluoroelastomer (a) and the crystalline fluoropolymer (b), and
(2-3) coagulating the fluoroelastomer (a) and the crystalline fluoropolymer (b) in the aqueous dispersion to give the polymer blend.

**17.** The production method according to claim 16,
wherein

(2-1) the aqueous dispersion comprising the crystalline fluoropolymer (b) is prepared in a reaction vessel, and then
(2-2) while continuing the polymerization reaction in the reaction vessel, the fluoroalkyl vinyl ether is introduced into the reaction vessel to polymerize tetrafluoroethylene, the fluoroalkyl vinyl ether, and a monomer having a nitrogen-containing crosslinkable group.

**18.** An article having:

a compression set measured after being left to stand at 300°C for 70 hours of 50% or less,
a compression set measured after being left to stand at 200°C for 70 hours and then left to stand at 70°C for 70 hours of less than 50%, and
a hardness measured in accordance with ASTM D2240 of 65 or more.

## INTERNATIONAL SEARCH REPORT

International application No. **PCT/JP2023/047240**

**A. CLASSIFICATION OF SUBJECT MATTER**

***C08L 27/18***(2006.01)i; ***C08F 214/26***(2006.01)i
FI: C08L27/18; C08F214/26

According to International Patent Classification (IPC) or to both national classification and IPC

**B. FIELDS SEARCHED**

Minimum documentation searched (classification system followed by classification symbols)

C08K3/00-13/08; C08L1/00-101/14; C08F6/00-246/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2022-514843 A (3M INNOVATIVE PROPERTIES COMPANY) 16 February 2022 (2022-02-16) claims 1-22, examples | 1-17 |
| A | JP 2006-511660 A (3M INNOVATIVE PROPERTIES COMPANY) 06 April 2006 (2006-04-06) claims 1-37, examples | 1-17 |
| A | JP 2022-514755 A (3M INNOVATIVE PROPERTIES COMPANY) 15 February 2022 (2022-02-15) claims 1-31, examples | 1-17 |
| A | JP 2009-500459 A (GORE ENTERPRISE HOLDINGS, INC.) 08 January 2009 (2009-01-08) claims 1-56, examples | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 March 2024** | **26 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2023/047240**

**Box No. III Observations where unity of invention is lacking (Continuation of item 3 of first sheet)**

This International Searching Authority found multiple inventions in this international application, as follows:

(Invention 1) Claims 1-17

Claims 1-17 have the special technical feature of a "polymer blend containing a fluoro elastomer (a) and a crystalline fluoropolymer (b), wherein the fluoroelastomer (a) contains tetrafluoroethylene units, fluoroalkyl vinyl ether units, and nitrogen-containing crosslinking moieties, the crystalline fluoropolymer (b) contains tetrafluoroethylene units and a nitrogen-containing crosslinking site, the melting point of the polymer blend is 310-320°C, and the content of the crystalline fluoropolymer (b) in the polymer blend is 4.0-15.0 mass% with respect to the total mass of the fluoroelastomer (a) and the crystalline fluoropolymer (b), and are thus classified as invention 1.

(Invention 2) Claim 18

Claims 18 is not dependent on claim 1. Also, claim 18 is not substantially identical to or similarly closely related to any of the claims classified as invention 1.

Therefore, claim 18 cannot be classified as invention 1.

Thus, the invention in claim 18 has the special technical feature of a "component that the compressive permanent set measured after being left at 300°C for 70 hours is 50% or less, the compressive permanent set measured after being left at 200°C for 70 hours and then left at 70°C for 70 hours is less than 50%, and hardness measured according to ASTM D2240 is 65 or higher" and is thus classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-17**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2023/047240**

| Patent document cited in search report | Publication date (day/month/year) | Patent family member(s) | Publication date (day/month/year) |
|---|---|---|---|
| JP 2022-514843 A | 16 February 2022 | US 2022/0049079 A1<br>claims 1-22, examples<br>WO 2020/132203 A1<br>EP 3898834 A1<br>CN 113195628 A<br>TW 202033654 A | |
| JP 2006-511660 A | 06 April 2006 | US 2004/0122163 A1<br>claims 1-37, examples<br>WO 2004/060944 A1<br>EP 1576020 A1<br>KR 10-2005-0092716 A<br>CN 1729218 A | |
| JP 2022-514755 A | 15 February 2022 | US 2022/0033635 A1<br>claims 1-31, examples<br>WO 2020/132213 A1<br>EP 3898835 A1<br>CN 113195629 A<br>TW 202033653 A | |
| JP 2009-500459 A | 08 January 2009 | US 2006/0270780 A1<br>claims 1-59, examples<br>US 2009/0253854 A1<br>US 2014/0088235 A1<br>US 2014/0088238 A1<br>WO 2006/127226 A1<br>EP 1885796 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009500459 W
- WO 2000029479 A
- US 20070015865
- JP 2014540475 A
- JP 9111081 A
- JP 2 A
- JP 59177 A
- JP 8120146 A